# EUROPEAN PATENT SPECIFICATION

(11) **EP 3 001 579 B1**
(45) Date of publication and mention of the grant of the patent: **09.08.2017**
(21) Application number: 14817844.5
(22) Date of filing: 27.06.2014
(51) Int. Cl.: H04B 7/14, H04B 7/155, H04W 72/04

(54) **RELAY CONFIGURATION METHOD AND DEVICE**
VERFAHREN UND VORRICHTUNG ZUR RELAISKONFIGURATION
PROCÉDÉ ET DISPOSITIF DE CONFIGURATION DE RELAIS

(30) Priority: 27.06.2013 CN 201310263269
(43) Date of publication of application: 30.03.2016
(73) Proprietor: Huawei Technologies Co., Ltd., Longgang District Shenzhen, Guangdong 518129 (CN)
(72) Inventor: LI, Zhengzheng, Shenzhen Guangdong 518129 (CN); CHEN, Weimin, Shenzhen Guangdong 518129 (CN)
(74) Representative: Gill Jennings & Every LLP
(86) International application number: PCT/CN2014/080956
(87) International publication number: WO 2014/206338

(56) References cited:
- EP-A1- 2 605 421
- WO-A2-2013/042934
- CN-A- 101 552 991
- CN-A- 101 998 432
- CN-A- 102 123 492
- CN-A- 102 763 346
- CN-A- 102 948 089
- US-A1- 2013 010 673

## Description

### TECHNICAL FIELD

The present invention relates to the field of communications technologies, and in particular, to a relay configuration method and a device.

### BACKGROUND

With development of an LTE (Long Term Evolution, Long Term Evolution) technology, a user's requirement for a coverage area of wireless communications continuously increases. To expand the coverage area of wireless communications, a wireless relay (Relay) technology is introduced to the LTE technology. In the wireless relay technology, a signal is not directly sent when a base station communicates with a terminal device, but is forwarded after being processed by a relay. The relay technology includes communication between an RN (Relay Node, relay node) and a base station and communication between the RN and a terminal device within a coverage area of the RN, where a link between the base station and the RN is referred to as a backhaul link, and a link between the RN and the terminal device is referred to as an access link.

In the prior art, before a communications network is deployed, spectrum resources of a backhaul link and an access link and a duplex mode of a relay need to be pre-configured, and in a subsequent communication process, the spectrum resources used by the backhaul link and the access link and the duplex mode of the relay do not change any more.

The prior art has at least the following disadvantages:
When the relay fixedly uses a frequency division duplex mode, and a frequency band of the access link is the same as or adjacent to a frequency band of the backhaul link, signal interference is caused, and the relay even cannot function properly; or when the relay fixedly uses a time division duplex mode, spectrum resources that have not been used by the access link and the backhaul link are wasted, which reduces spectrum resource utilization. Moreover, when the foregoing case occurs or a load status and an interference status of the communications network change, the communications network cannot be flexibly configured, thereby degrading network performance.

WO 2013/042934 relates to method and system for implementing mobile relay. EP 2605421 relates to method, system and wireless communication device for auxiliary transmission to adjacent channels. US 2013/010673 relates to relay method for increasing frequency selective characteristic of wireless channel and relay device using same.

### SUMMARY

To resolve a problem in the prior art, embodiments of the present invention provide a relay configuration method and a device. The technical solutions are as follows:

According to a first aspect, a relay configuration method is provided, where a communications system includes a wireless relay relay, a terminal device, and a base station, a communications link between the relay and the terminal device is an access link, a communications link between the relay and the base station is a backhaul link, and the method includes:
receiving, by a configuration apparatus, a first candidate frequency band set, a second candidate frequency band set, and an adjacent-frequency guard interval, and/or receiving, by the configuration apparatus, a duplex mode capability supported by the relay, where the adjacent-frequency guard interval is determined according to an outband suppression capability of the relay, the first candidate frequency band set includes a candidate frequency band of the access link, and the second candidate frequency band set includes a candidate frequency band of the backhaul link;
determining, by the configuration apparatus, configuration results of the access link and the backhaul link according to the first candidate frequency band set, the second candidate frequency band set, and the adjacent-frequency guard interval, and/or the duplex mode capability supported by the relay, where the configuration results include a first determined frequency band and a second determined frequency band, and/or the configuration results include a duplex mode; and
sending, by the configuration apparatus, the configuration results to the relay and the base station separately, so that the relay and the base station configure, according to the configuration results, frequency bands and/or a duplex mode for the access link and the backhaul link to work;
wherein, the first candidate frequency band set and the adjacent-frequency guard interval are sent by the relay; and the second candidate frequency band set is sent by the base station.

In a first possible implementation manner of the first aspect, the determining, by the configuration apparatus, configuration results of the access link and the backhaul link according to the first candidate frequency band set, the second candidate frequency band set, and the adjacent-frequency guard interval, and/or the duplex mode capability supported by the relay includes:
acquiring, by the configuration apparatus, the first determined frequency band and the second determined frequency band according to the first candidate frequency band set, the second candidate frequency band set, and the adjacent-frequency guard interval; or
determining, by the configuration apparatus, the duplex mode according to the duplex mode capability supported by the relay; or
acquiring, by the configuration apparatus, the first determined frequency band and the second determined frequency band according to the first candidate frequency band set, the second candidate frequency band set, and the adjacent-frequency guard interval, and determining the duplex mode according to the first determined frequency band, the second determined frequency band, and the duplex mode capability supported by the relay.

With reference to the first possible implementation manner of the first aspect, in a second possible implementation manner of the first aspect, the acquiring, by the configuration apparatus, the first determined frequency band and the second determined frequency band according to the first candidate frequency band set, the second candidate frequency band set, and the adjacent-frequency guard interval includes:
acquiring a frequency band interval between each frequency band in the first candidate frequency band set and each frequency band in the second candidate frequency band set; and
acquiring the first determined frequency band and the second determined frequency band according to an acquired maximum frequency band interval and the adjacent-frequency guard interval.

With reference to the second possible implementation manner of the first aspect, in a third possible implementation manner of the first aspect, the acquiring the first determined frequency band and the second determined frequency band according to an acquired maximum frequency band interval and the adjacent-frequency guard interval includes:
when the acquired maximum frequency band interval is greater than or equal to the adjacent-frequency guard interval, determining, by the configuration apparatus, that a frequency band that is in the first candidate frequency band set and corresponding to the maximum frequency band interval is the first determined frequency band, and determining that a frequency band that is in the second candidate frequency band set and corresponding to the maximum frequency band interval is the second determined frequency band; or
when the acquired maximum frequency band interval is less than the adjacent-frequency guard interval, selecting, by the configuration apparatus, a frequency band interval, and determining that frequency bands that are in the first candidate frequency band set and the second candidate frequency band set and corresponding to the selected frequency band interval are respectively the first determined frequency band and the second determined frequency band.

With reference to the first possible implementation manner of the first aspect, in a fourth possible implementation manner of the first aspect, the determining the duplex mode according to the first determined frequency band, the second determined frequency band, and the duplex mode capability supported by the relay includes:
when an acquired maximum frequency band interval is greater than or equal to the adjacent-frequency guard interval, and determining, according to the duplex mode capability supported by the relay, that the relay supports a frequency division duplex mode, determining that the duplex mode is the frequency division duplex mode.

With reference to the first possible implementation manner of the first aspect, in a fifth possible implementation manner of the first aspect, the determining the duplex mode according to the first determined frequency band, the second determined frequency band, and the duplex mode capability supported by the relay includes:
when the first determined frequency band is equal to the second determined frequency band, and determining, according to the duplex mode capability supported by the relay, that the relay supports a time division duplex mode, determining, by the configuration apparatus, that the duplex mode is the time division duplex mode; or
when the first determined frequency band is equal to the second determined frequency band, and determining, according to the duplex mode capability supported by the relay, that the relay supports a full-duplex mode, determining, by the configuration apparatus, that the duplex mode is the full-duplex mode; or
when the first determined frequency band and the second determined frequency band are adjacent frequency bands, a ratio of the adjacent-frequency guard interval to a total bandwidth of the first determined frequency band and the second determined frequency band falls within a preset ratio range, and determining, according to the duplex mode capability supported by the relay, that the relay supports a frequency division duplex mode with a reserved guard band, determining, by the configuration apparatus, that the duplex mode is the frequency division duplex mode with the reserved guard band; or
when the first determined frequency band and the second determined frequency band are adjacent frequency bands, a ratio of the adjacent-frequency guard interval to a total bandwidth of the first determined frequency band and the second determined frequency band falls outside a preset ratio range, and determining, according to the duplex mode capability supported by the relay, that the relay supports a time division duplex mode, determining, by the configuration apparatus, that the duplex mode is the time division duplex mode.

With reference to any one of the foregoing possible implementation manners, in a sixth possible implementation manner of the first aspect,
the configuration apparatus is located on the base station; or
the configuration apparatus is located on an operation, administration and maintenance OAM server; or
the configuration apparatus is located on the relay; or
the configuration apparatus is located on a centralized controller.

According to a second aspect, a relay configuration method is provided, where the method includes:
acquiring, by a wireless relay relay, a first candidate frequency band set of an access link according to a status of interference to a neighboring cell and a preset threshold;
sending, by the relay, the first candidate frequency band set and an adjacent-frequency guard interval to a configuration apparatus, and/or sending, by the relay, a duplex mode capability supported by the relay to the configuration apparatus, so that the configuration apparatus determines configuration results according to the first candidate frequency band set and the adjacent-frequency guard interval that are received, and a second candidate frequency band set that is of a backhaul link and sent by a base station, and/or the received duplex mode capability supported by the relay;
receiving, by the relay, the configuration results sent by the configuration apparatus, where the configuration results include a first determined frequency band and a second determined frequency band, and/or the configuration results include a duplex mode; and
configuring, by the relay according to the configuration results, a frequency band and/or the duplex mode for the access link to work.

In a first possible implementation manner of the second aspect, the acquiring, by a wireless relay relay, a first candidate frequency band set of an access link according to a status of interference to a neighboring cell and a preset threshold includes:
acquiring a reference signal received power, in each frequency band, of a neighboring cell of a coverage area of the relay; and
when a reference signal received power, in any frequency band, of the neighboring cell is less than the preset threshold, acquiring, by the relay, the frequency band in which the reference signal received power is less than the preset threshold and using the frequency band as a candidate frequency band in the first candidate frequency band set.

According to a third aspect, a relay configuration method is provided, where the method includes:
determining, by a base station, a second candidate frequency band set of a backhaul link according to a load status of each frequency band;
sending, by the base station, the second candidate frequency band set to a configuration apparatus, so that the configuration apparatus determines configuration results according to a first candidate frequency band set and an adjacent-frequency guard interval that are sent by a wireless relay relay, and the second candidate frequency band set, and/or a duplex mode capability that is supported by the relay and sent by the relay;
receiving, by the base station, the configuration results sent by the configuration apparatus; and
configuring, by the base station according to the configuration results, frequency bands and/or a duplex mode for an access link and the backhaul link to work.

In a first possible implementation manner of the third aspect, the determining, by a base station, a second candidate frequency band set of a backhaul link according to a load status of each frequency band includes:
acquiring, by the base station, the load status of each frequency band; and
determining that a frequency band, in each frequency band, whose load status meets a preset condition is a candidate frequency band in the second candidate frequency band set.

According to a fourth aspect, a configuration apparatus is provided, where a communications system includes a wireless relay relay, a terminal device, and a base station, a communications link between the relay and the terminal device is an access link, a communications link between the relay and the base station is a backhaul link, and the apparatus includes:
a receiving module, configured to receive a first candidate frequency band set, a second candidate frequency band set, and an adjacent-frequency guard interval, and/or receive a duplex mode capability supported by the relay, where the adjacent-frequency guard interval is determined according to an outband suppression capability of the relay, the first candidate frequency band set includes a candidate frequency band of the access link, and the second candidate frequency band set includes a candidate frequency band of the backhaul link;
a configuration result determining module, configured to determine configuration results of the access link and the backhaul link according to the first candidate frequency band set, the second candidate frequency band set, and the adjacent-frequency guard interval, and/or the duplex mode capability supported by the relay, where the configuration results include a first determined frequency band and a second determined frequency band, and/or the configuration results include a duplex mode; and
a configuration result sending module, configured to send the configuration results to the relay and the base station separately, so that the relay and the base station configure, according to the configuration results, frequency bands and/or a duplex mode for the access link and the backhaul link to work.

In a first possible implementation manner of the fourth aspect, the configuration result determining module includes:
a first determining unit, configured to acquire the first determined frequency band and the second determined frequency band according to the first candidate frequency band set, the second candidate frequency band set, and the adjacent-frequency guard interval; or
a second determining unit, configured to determine the duplex mode according to the duplex mode capability supported by the relay; or
a third determining unit, configured to acquire the first determined frequency band and the second determined frequency band according to the first candidate frequency band set, the second candidate frequency band set, and the adjacent-frequency guard interval, and determine the duplex mode according to the first determined frequency band, the second determined frequency band, and the duplex mode capability supported by the relay.

With reference to the first possible implementation manner of the fourth aspect, in a second possible implementation manner of the fourth aspect, the first determining unit includes:
a frequency band interval acquiring subunit, configured to acquire a frequency band interval between each frequency band in the first candidate frequency band set and each frequency band in the second candidate frequency band set; and
a frequency band determining subunit, configured to acquire the first determined frequency band and the second determined frequency band according to an acquired maximum frequency band interval and the adjacent-frequency guard interval.

With reference to the second possible implementation manner of the fourth aspect, in a third possible implementation manner of the fourth aspect, the frequency band determining subunit is configured to: when the acquired maximum frequency band interval is greater than or equal to the adjacent-frequency guard interval, determine that a frequency band that is in the first candidate frequency band set and corresponding to the maximum frequency band interval is the first determined frequency band, and determine that a frequency band that is in the second candidate frequency band set and corresponding to the maximum frequency band interval is the second determined frequency band; or
the frequency band determining subunit is configured to: when the acquired maximum frequency band interval is less than the adjacent-frequency guard interval, select a frequency band interval, and determine that frequency bands that are in the first candidate frequency band set and the second candidate frequency band set and corresponding to the selected frequency band interval are respectively the first determined frequency band and the second determined frequency band.

With reference to the second possible implementation manner of the fourth aspect, in a fourth possible implementation manner of the fourth aspect, the third determining unit is configured to: when the acquired maximum frequency band interval is greater than or equal to the adjacent-frequency guard interval, and determining, according to the duplex mode capability supported by the relay, that the relay supports a frequency division duplex mode, determine that the duplex mode is the frequency division duplex mode.

With reference to the second possible implementation manner of the fourth aspect, in a fifth possible implementation manner of the fourth aspect, the third determining unit is configured to: when the first determined frequency band is equal to the second determined frequency band, and determining, according to the duplex mode capability supported by the relay, that the relay supports a time division duplex mode, determine that the duplex mode is the time division duplex mode; or
the third determining unit is configured to: when the first determined frequency band is equal to the second determined frequency band, and determining, according to the duplex mode capability supported by the relay, that the relay supports a full-duplex mode, determine that the duplex mode is the full-duplex mode; or
the third determining unit is configured to: when the first determined frequency band and the second determined frequency band are adjacent frequency bands, a ratio of the adjacent-frequency guard interval to a total bandwidth of the first determined frequency band and the second determined frequency band falls within a preset ratio range, and determining, according to the duplex mode capability supported by the relay, that the relay supports a frequency division duplex mode with a reserved guard band, determine that the duplex mode is the frequency division duplex mode with the reserved guard band; or
the third determining unit is configured to: when the first determined frequency band and the second determined frequency band are adjacent frequency bands, a ratio of the adjacent-frequency guard interval to a total bandwidth of the first determined frequency band and the second determined frequency band falls outside a preset ratio range, and determining, according to the duplex mode capability supported by the relay, that the relay supports a time division duplex mode, determine that the duplex mode is the time division duplex mode.

With reference to any one of the foregoing possible implementation manners, in a sixth possible implementation manner of the fourth aspect,
the apparatus is located on the base station; or
located on an operation, administration and maintenance OAM server; or
located on the relay; or
located on a centralized controller.

According to a fifth aspect, a device is provided, including: a receiver, a transmitter, a memory, and a processor, where the receiver, the transmitter, and the memory are separately connected to the processor, the memory stores program code, and the processor is configured to invoke the program code to execute the following operations:
receiving a first candidate frequency band set, a second candidate frequency band set, and an adjacent-frequency guard interval, and/or receiving, by the configuration apparatus, a duplex mode capability supported by the relay, where the adjacent-frequency guard interval is determined according to an outband suppression capability of the relay, the first candidate frequency band set includes a candidate frequency band of the access link, and the second candidate frequency band set includes a candidate frequency band of the backhaul link;
determining configuration results of the access link and the backhaul link according to the first candidate frequency band set, the second candidate frequency band set, and the adjacent-frequency guard interval, and/or the duplex mode capability supported by the relay, where the configuration results include a first determined frequency band and a second determined frequency band, and/or the configuration results include a duplex mode; and
sending the configuration results to the relay and the base station separately, so that the relay and the base station configure, according to the configuration results, frequency bands and/or a duplex mode for the access link and the backhaul link to work.

According to a sixth aspect, a relay device is provided, including: a receiver, a transmitter, a memory, and a processor, where the receiver, the transmitter, and the memory are separately connected to the processor, the memory stores program code, and the processor is configured to invoke the program code to execute the following operations:
acquiring a first candidate frequency band set of an access link according to a status of interference to a neighboring cell and a preset threshold;
sending, by using the transmitter, the first candidate frequency band set and an adjacent-frequency guard interval to a configuration apparatus, and/or sending, by the relay, a duplex mode capability supported by the relay to the configuration apparatus, so that the configuration apparatus determines configuration results according to the first candidate frequency band set and the adjacent-frequency guard interval that are received, and a second candidate frequency band set that is of a backhaul link and sent by a base station, and/or the received duplex mode capability supported by the relay;
receiving, by using the receiver, the configuration results sent by the configuration apparatus, where the configuration results include a first determined frequency band and a second determined frequency band, and/or the configuration results include a duplex mode; and
configuring, according to the configuration results, a frequency band and/or the duplex mode for the access link to work.

According to a seventh aspect, a base station is provided, including: a receiver, a transmitter, a memory, and a processor, where the receiver, the transmitter, and the memory are separately connected to the processor, the memory stores program code, and the processor is configured to invoke the program code to execute the following operations:
determining a second candidate frequency band set of a backhaul link according to a load status of each frequency band;
sending, by using the transmitter, the second candidate frequency band set to a configuration apparatus, so that the configuration apparatus determines configuration results according to a first candidate frequency band set and an adjacent-frequency guard interval that are sent by a wireless relay relay, and the second candidate frequency band set, and/or a duplex mode capability that is supported by the relay and sent by the relay;
receiving, by using the receiver, the configuration results sent by the configuration apparatus; and
configuring, according to the configuration results, frequency bands and/or a duplex mode for an access link and the backhaul link to work.

A technical solution provided in the embodiments of the present invention brings the following beneficial effects:
Configuration results are determined according to candidate frequency bands of an access link and a backhaul link and an adjacent-frequency guard interval, and frequency bands and a duplex mode are configured, according to the configuration results, for the access link and the backhaul link to work, so that a communications network can be flexibly configured according to an interference status and a load status, thereby improving spectrum resource utilization and network performance.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a relay configuration method according to an embodiment of the present invention;
FIG. 2 is a flowchart of a relay configuration method according to an embodiment of the present invention;
FIG. 3 is a flowchart of a relay configuration method according to an embodiment of the present invention;
FIG. 4a1 and FIG. 4a2 are a flowchart of a relay configuration method according to an embodiment of the present invention;
FIG. 4b is a schematic diagram of frequency band switching according to an embodiment of the present invention;
FIG. 4c is a schematic diagram of duplex mode switching according to an embodiment of the present invention;
FIG. 5a1 and FIG. 5a2 are a flowchart of a relay configuration method according to an embodiment of the present invention;
FIG. 5b is a schematic diagram of a time division duplex mode according to an embodiment of the present invention;
FIG. 6a and FIG. 6b are a flowchart of a relay configuration method according to an embodiment of the present invention;
FIG. 7 is a schematic structural diagram of a configuration apparatus according to an embodiment of the present invention;
FIG. 8 is a schematic structural diagram of a device according to an embodiment of the present invention;
FIG. 9 is a schematic structural diagram of a relay device according to an embodiment of the present invention; and
FIG. 10 is a schematic structural diagram of a base station according to an embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

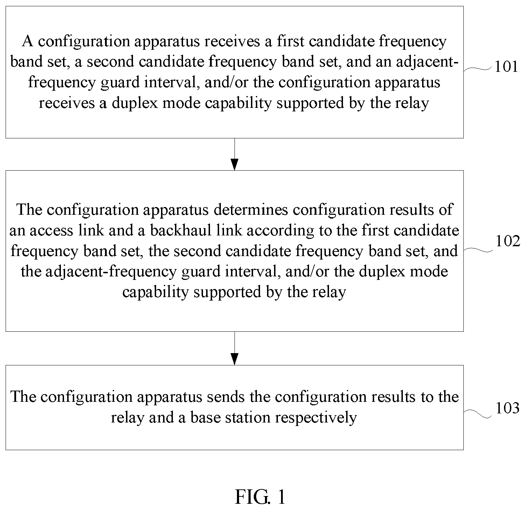

FIG. 1 is a flowchart of a relay configuration method according to an embodiment of the present invention. This embodiment of the present invention is executed by a configuration apparatus. In this embodiment of the present invention, a communications system includes a wireless relay relay, a terminal device, and a base station, a communications link between the relay and the terminal device is an access link, and a communications link between the relay and the base station is a backhaul link. Referring to FIG. 1, the method includes the following steps:
101. The configuration apparatus receives a first candidate frequency band set, a second candidate frequency band set, and an adjacent-frequency guard interval, and/or the configuration apparatus receives a duplex mode capability supported by the relay, where the adjacent-frequency guard interval is determined according to an outband suppression capability of the wireless relay relay, the first candidate frequency band set includes a candidate frequency band of the access link, and the second candidate frequency band set includes a candidate frequency band of the backhaul link.
   Step 101 specifically includes the following three cases:
   (1) The configuration apparatus receives the first candidate frequency band set, the second candidate frequency band set, and the adjacent-frequency guard interval.
      Specifically, the relay determines the adjacent-frequency guard interval according to the outband suppression capability, determines multiple candidate frequency bands of the access link according to a measured status of interference to a neighboring cell, that is, acquires the first candidate frequency band set, and sends the adjacent-frequency guard interval and the first candidate frequency band set to the configuration apparatus. The base station determines multiple candidate frequency bands of the backhaul link by testing a load status of each frequency band, that is, acquires the second candidate frequency band set, and sends the second candidate frequency band set to the configuration apparatus. The configuration apparatus receives the first candidate frequency band set, the second candidate frequency band set, and the adjacent-frequency guard interval.
      Processes in which the relay measures the status of the interference to the neighboring cell and the base station measures the load status of each frequency band may be periodically performed, which is not limited in this embodiment of the present invention.
      Preferably, the adjacent-frequency guard interval is greater than or equal to 5 MHz.
      In this embodiment of the present invention, spectrum resources provided by an operator are divided into multiple frequency ranges according to a preset interval, and each frequency range is a frequency band. For example, the operator provides spectrum resources of 80 MHz, which may be divided into four frequency bands according to that 20 MHz is a frequency band, where the four frequency bands are successively f1, f2, f3, and f4.
   (2) The configuration apparatus receives the duplex mode capability supported by the relay.
      The duplex mode capability supported by the relay includes a time division duplex mode, a frequency division duplex mode, a frequency division duplex mode with a reserved guard band, and a full-duplex mode. A process in which the relay sends the duplex mode capability supported by the relay to the configuration apparatus may be periodically performed, which is not limited in this embodiment of the present invention.
      Specifically, the relay sends the duplex mode capability supported by the relay to the configuration apparatus; the configuration apparatus receives the duplex mode capability supported by the relay, and can determine, according to the received duplex mode capability supported by the relay, a duplex mode configured for the relay, and configure a proper operating frequency band for the access link and the backhaul link of the relay according to the duplex mode capability supported by the relay. This embodiment of the present invention sets no limitation thereto.
      For example, when the duplex mode capability that is supported by the relay and received by the configuration apparatus includes the full-duplex mode and the frequency division duplex mode, it may be determined that the duplex mode is the full-duplex mode, and the access link and the backhaul link are configured to work in a same frequency band; or it may be determined that the duplex mode is the frequency division duplex mode, and the access link and the backhaul link are configured to work in different frequency bands.
   (3) The configuration apparatus receives the first candidate frequency band set, the second candidate frequency band set, the adjacent-frequency guard interval, and the duplex mode capability supported by the relay.
102. The configuration apparatus determines configuration results of the access link and the backhaul link according to the first candidate frequency band set, the second candidate frequency band set, and the adjacent-frequency guard interval, and/or the duplex mode capability supported by the relay, where the configuration results include a first determined frequency band and a second determined frequency band, and/or the configuration results include a duplex mode.

The configuration apparatus determines, according to the first candidate frequency band set, the second candidate frequency band set, and the adjacent-frequency guard interval, a frequency band used by the access link and a frequency band used by the backhaul link, that is, the first determined frequency band and the second determined frequency band.

The configuration apparatus determines the duplex mode of the relay according to the duplex mode capability supported by the relay, or may determine the duplex mode of the relay according to the first determined frequency band, the second determined frequency band, and the duplex mode capability supported by the relay.

According to different specific statuses of the communications system, the duplex mode may be the time division duplex mode, the frequency division duplex mode, the frequency division duplex mode with the reserved guard band, and the full-duplex mode.

103. The configuration apparatus separately sends the configuration results to the relay and the base station, so that the relay and the base station configure, according to the configuration results, frequency bands and/or a duplex mode for the access link and the backhaul link to work.

Specifically, the configuration apparatus sends the configuration results to the relay and the base station, the base station may configure an operating parameter for the relay according to the configuration results, and the relay uses, according to the configuration results, a new frequency band or a new duplex mode to work.

According to the method provided in this embodiment of the present invention, a configuration apparatus receives a first candidate frequency band set, a second candidate frequency band set, and an adjacent-frequency guard interval, and/or the configuration apparatus receives a duplex mode capability supported by a relay; determines configuration results according to the first candidate frequency band set, the second candidate frequency band set, and the adjacent-frequency guard interval, and/or the duplex mode capability supported by the relay; and sends the configuration results to the relay and the base station, so that the relay and the base station configure, according to the configuration results, frequency bands and/or a duplex mode for an access link and a backhaul link to work. By using the technical solution in the present invention, the configuration results are determined, and the frequency bands and/or the duplex mode are configured, according to the configuration results, for the access link and the backhaul link to work, so that a communications network can be flexibly configured according to an interference status and a load status, thereby improving spectrum resource utilization and network performance.

Optionally, the determining, by the configuration apparatus, configuration results of the access link and the backhaul link according to the first candidate frequency band set, the second candidate frequency band set, and the adjacent-frequency guard interval, and/or the duplex mode capability supported by the relay includes:
acquiring, by the configuration apparatus, the first determined frequency band and the second determined frequency band according to the first candidate frequency band set, the second candidate frequency band set, and the adjacent-frequency guard interval; or
determining, by the configuration apparatus, the duplex mode according to the duplex mode capability supported by the relay; or
acquiring, by the configuration apparatus, the first determined frequency band and the second determined frequency band according to the first candidate frequency band set, the second candidate frequency band set, and the adjacent-frequency guard interval, and determining the duplex mode according to the first determined frequency band, the second determined frequency band, and the duplex mode capability supported by the relay.

Optionally, the acquiring, by the configuration apparatus, the first determined frequency band and the second determined frequency band according to the first candidate frequency band set, the second candidate frequency band set, and the adjacent-frequency guard interval includes:
acquiring a frequency band interval between each frequency band in the first candidate frequency band set and each frequency band in the second candidate frequency band set; and
acquiring the first determined frequency band and the second determined frequency band according to an acquired maximum frequency band interval and the adjacent-frequency guard interval.

Optionally, the acquiring the first determined frequency band and the second determined frequency band according to an acquired maximum frequency band interval and the adjacent-frequency guard interval includes:
when the acquired maximum frequency band interval is greater than or equal to the adjacent-frequency guard interval, determining, by the configuration apparatus, that a frequency band that is in the first candidate frequency band set and corresponding to the maximum frequency band interval is the first determined frequency band, and determining that a frequency band that is in the second candidate frequency band set and corresponding to the maximum frequency band interval is the second determined frequency band; or
when the acquired maximum frequency band interval is less than the adjacent-frequency guard interval, selecting, by the configuration apparatus, a frequency band interval, and determining that frequency bands that are in the first candidate frequency band set and the second candidate frequency band set and corresponding to the selected frequency band interval are respectively the first determined frequency band and the second determined frequency band.

Optionally, the determining the duplex mode according to the first determined frequency band, the second determined frequency band, and the duplex mode capability supported by the relay includes:
when an acquired maximum frequency band interval is greater than or equal to the adjacent-frequency guard interval, and determining, according to the duplex mode capability supported by the relay, that the relay supports a frequency division duplex mode, determining that the duplex mode is the frequency division duplex mode.

Optionally, the determining the duplex mode according to the first determined frequency band, the second determined frequency band, and the duplex mode capability supported by the relay includes:
when the first determined frequency band is equal to the second determined frequency band, and determining, according to the duplex mode capability supported by the relay, that the relay supports a time division duplex mode, determining, by the configuration apparatus, that the duplex mode is the time division duplex mode; or
when the first determined frequency band is equal to the second determined frequency band, and determining, according to the duplex mode capability supported by the relay, that the relay supports a full-duplex mode, determining, by the configuration apparatus, that the duplex mode is the full-duplex mode; or
when the first determined frequency band and the second determined frequency band are adjacent frequency bands, a ratio of the adjacent-frequency guard interval to a total bandwidth of the first determined frequency band and the second determined frequency band falls within a preset ratio range, and determining, according to the duplex mode capability supported by the relay, that the relay supports a frequency division duplex mode with a reserved guard band, determining, by the configuration apparatus, that the duplex mode is the frequency division duplex mode with the reserved guard band; or
when the first determined frequency band and the second determined frequency band are adjacent frequency bands, a ratio of the adjacent-frequency guard interval to a total bandwidth of the first determined frequency band and the second determined frequency band falls outside a preset ratio range, and determining, according to the duplex mode capability supported by the relay, that the relay supports a time division duplex mode, determining, by the configuration apparatus, that the duplex mode is the time division duplex mode.

Optionally, the configuration apparatus is located on the base station; or
the configuration apparatus is located on an operation, administration and maintenance OAM server; or
the configuration apparatus is located on the relay; or
the configuration apparatus is located on a centralized controller.

Any combination of all the foregoing optional technical solutions may be used to form an optional embodiment of the present invention, and details are not described herein again.

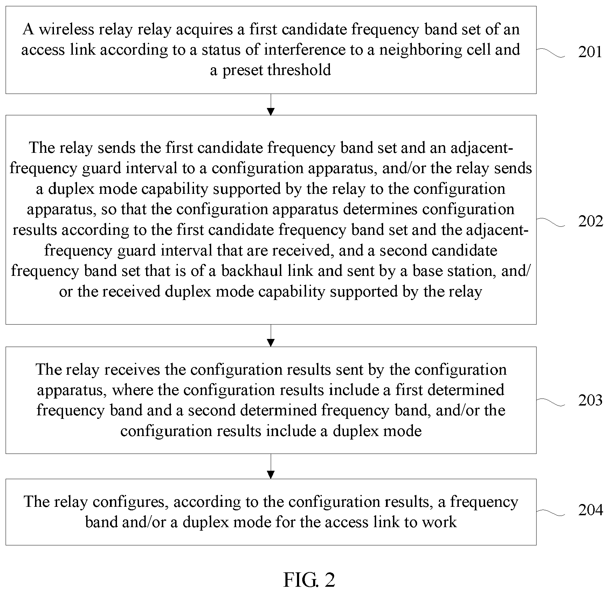

FIG. 2 is a flowchart of a relay configuration method according to an embodiment of the present invention. This embodiment of the present invention is executed by a wireless relay relay. Referring to FIG. 2, the method includes the following steps:
201. The wireless relay relay acquires a first candidate frequency band set of an access link according to a status of interference to a neighboring cell and a preset threshold.
   Specifically, the relay measures a parameter such as an RSRP (Reference Signal Receiving Power, reference signal received power), in each frequency band, of a neighboring cell of a coverage area of the relay, and acquires a neighboring cell interference parameter, so as to learn the status of the interference to the neighboring cell. When a neighboring cell interference parameter in any frequency band is less than the preset threshold, it is determined that the frequency band in which the neighboring cell interference parameter is less than the preset threshold is a candidate frequency band, and multiple candidate frequency bands may be determined by measuring a neighboring cell interference parameter in each frequency band, so as to obtain the first candidate frequency band set that includes the multiple candidate frequency bands.
202. The relay sends the first candidate frequency band set and an adjacent-frequency guard interval to a configuration apparatus, and/or the relay sends a duplex mode capability supported by the relay to the configuration apparatus, so that the configuration apparatus determines configuration results according to the first candidate frequency band set and the adjacent-frequency guard interval that are received, and a second candidate frequency band set that is of a backhaul link and sent by a base station, and/or the received duplex mode capability supported by the relay.
   Specifically, the relay sends the first candidate frequency band set and the adjacent-frequency guard interval to the configuration apparatus; the configuration apparatus receives the first candidate frequency band set and the adjacent-frequency guard interval, receives the second candidate frequency band set sent by the base station, and determines the configuration results according to the first candidate frequency band set, the adjacent-frequency guard interval, and the second candidate frequency band set. Alternatively, the relay sends the duplex mode capability supported by the relay to the configuration apparatus; the configuration apparatus receives the duplex mode capability supported by the relay, and determines the configuration results according to the duplex mode capability supported by the relay. Alternatively, the relay sends the first candidate frequency band set, the adjacent-frequency guard interval, and the duplex mode capability supported by the relay to the configuration apparatus; the configuration apparatus receives the first candidate frequency band set, the adjacent-frequency guard interval, and the duplex mode capability supported by the relay, receives the second candidate frequency band set sent by the base station, and determines the configuration results according to the first candidate frequency band set, the adjacent-frequency guard interval, the second candidate frequency band set, and the duplex mode capability supported by the relay.
203. The relay receives the configuration results sent by the configuration apparatus, where the configuration results include a first determined frequency band and a second determined frequency band, and/or the configuration results include a duplex mode.
   The configuration results determine a frequency band used by the access link, that is, the first determined frequency band, and a frequency band used by the backhaul link, that is, the second determined frequency band, and the configuration results may further include a duplex mode that is of the relay and configured by the configuration apparatus.
204. The relay configures, according to the configuration results, a frequency band and/or the duplex mode for the access link to work.

The relay switches an original frequency band of the access link and an original frequency band of the backhaul link to the first determined frequency band and the second determined frequency band according to the first determined frequency band, the second determined frequency band, and the duplex mode that are in the configuration results, and uses the duplex mode configured by the configuration apparatus to work, thereby implementing that a communications network is flexibly configured according to the configuration results, and avoiding signal interference or waste of spectrum resources.

According to the method provided in this embodiment of the present invention, a wireless relay relay acquires a first candidate frequency band set of an access link according to a status of interference to a neighboring cell and a preset threshold; the relay sends the first candidate frequency band set and an adjacent-frequency guard interval to a configuration apparatus, and/or the relay sends a duplex mode capability supported by the relay to the configuration apparatus, so that the configuration apparatus determines configuration results according to the first candidate frequency band set and the adjacent-frequency guard interval that are received, and a second candidate frequency band set that is of a backhaul link and sent by a base station, and/or the received duplex mode capability supported by the relay; and the relay receives the configuration results sent by the configuration apparatus, and configures, according to the configuration results, a frequency band and/or the duplex mode for the access link to work. By using the technical solution in this embodiment of the present invention, the configuration results determined by the relay are received, and frequency bands and a duplex mode are configured, according to the configuration results, for the access link and the backhaul link to work, so that a communications network can be flexibly configured according to an interference status and a load status, thereby improving spectrum resource utilization and network performance.

Optionally, the acquiring, by the wireless relay relay, a first candidate frequency band set of an access link according to a status of interference to a neighboring cell and a preset threshold includes:
acquiring a reference signal received power, in each frequency band, of a neighboring cell of a coverage area of the relay; and
when an RSRP, in any frequency band, of the neighboring cell is less than the preset threshold, acquiring, by the relay, the frequency band in which the reference signal received power is less than the preset threshold and using the frequency band as a candidate frequency band in the first candidate frequency band set.

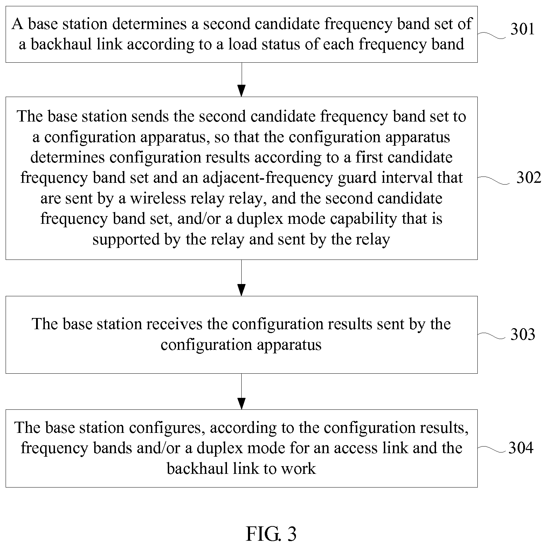

FIG. 3 is a flowchart of a relay configuration method according to an embodiment of the present invention. This embodiment of the present invention is executed by a base station. Referring to FIG. 3, the method includes the following steps:
301. The base station determines a second candidate frequency band set of a backhaul link according to a load status of each frequency band.
   The base station measures the load status of each frequency band, for example, a parameter such as resource utilization. When a load parameter in any frequency band is less than a preset threshold or load in any frequency band decreases, it may be determined that the frequency band in which the load parameter is less than the preset threshold or the load decreases is a candidate frequency band of the backhaul link, and the second candidate frequency band set is determined by measuring the load status of each frequency band.
302. The base station sends the second candidate frequency band set to a configuration apparatus, so that the configuration apparatus determines configuration results according to a first candidate frequency band set and an adjacent-frequency guard interval that are sent by a wireless relay relay, and the second candidate frequency band set, and/or a duplex mode capability that is supported by the relay and sent by the relay.
303. The base station receives the configuration results sent by the configuration apparatus.
304. The base station configures, according to the configuration results, frequency bands and/or a duplex mode for an access link and the backhaul link to work.

The base station switches an original frequency band of the backhaul link to a second determined frequency band according to the second determined frequency band and the duplex mode that are in the configuration results, and uses a new duplex mode to work, thereby implementing that a communications network is flexibly configured according to the configuration results, and avoiding signal interference or waste of spectrum resources.

According to the method provided in this embodiment of the present invention, a base station determines a second candidate frequency band set of a backhaul link according to a load status of each frequency band, and sends the second candidate frequency band set to a configuration apparatus, so that the configuration apparatus determines configuration results according to a first candidate frequency band set and an adjacent-frequency guard interval that are sent by a wireless relay relay, and the second candidate frequency band set, and/or a duplex mode capability that is supported by the relay and sent by the relay; the base station receives the configuration results sent by the configuration apparatus, and configures, according to the configuration results, frequency bands and a duplex mode for an access link and the backhaul link to work. By using the technical solution in this embodiment of the present invention, the base station receives the configuration results determined by the configuration apparatus, and configures, according to the configuration results, the frequency bands and/or the duplex mode for the access link and the backhaul link to work, so that a communications network can be flexibly configured according to an interference status and a load status, thereby improving spectrum resource utilization and network performance.

Optionally, the determining, by the base station, a second candidate frequency band set of a backhaul link according to a load status of each frequency band includes:
acquiring, by the base station, the load status of each frequency band; and
determining that a frequency band, in each frequency band, whose load status meets a preset condition is a candidate frequency band in the second candidate frequency band set.

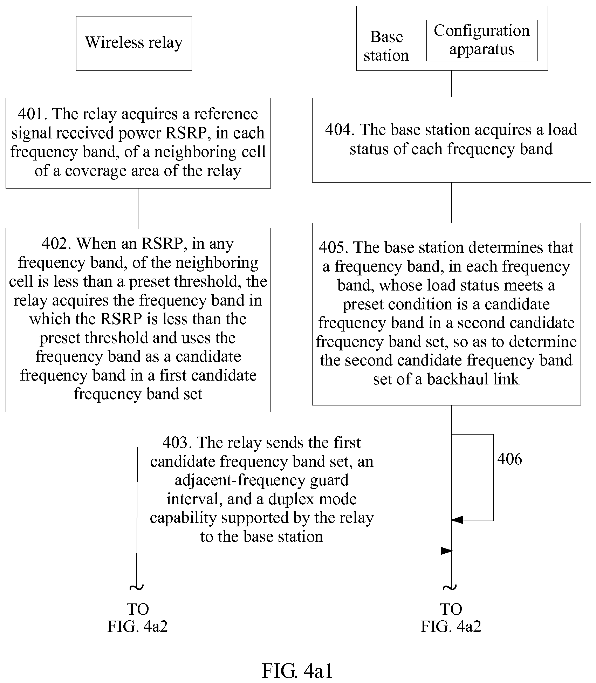

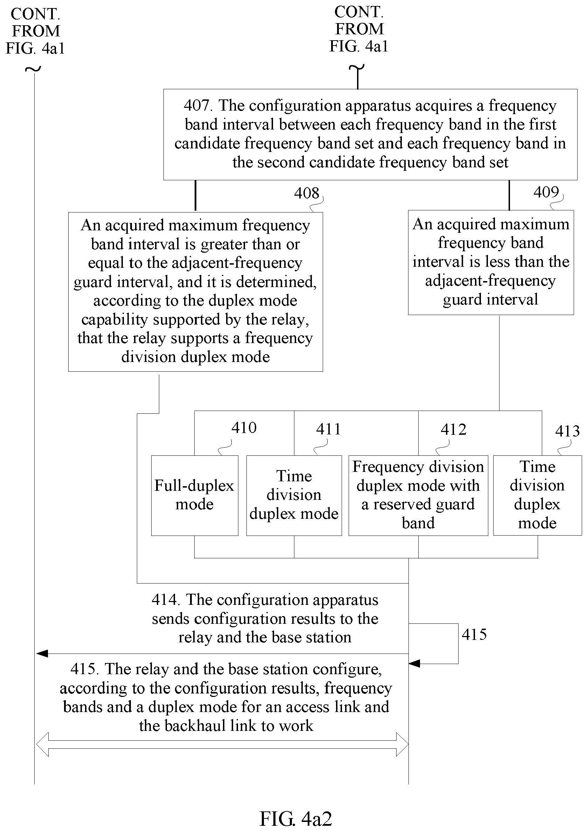

FIG. 4a1 and FIG. 4a2 are a flowchart of a relay configuration method according to an embodiment of the present invention. Two interaction parties in this embodiment of the present invention are a base station and a wireless relay relay, and a configuration apparatus is configured on the base station. Referring to FIG. 4a1 and FIG. 4a2, the method includes the following steps:
401. The relay acquires a reference signal received power RSRP, in each frequency band, of a neighboring cell of a coverage area of the relay.
402. When an RSRP, in any frequency band, of the neighboring cell is less than a preset threshold, the relay acquires the frequency band in which the RSRP is less than the preset threshold and uses the frequency band as a candidate frequency band in a first candidate frequency band set.
   In this embodiment of the present invention, the relay compares the RSRP, in each frequency band, of the neighboring cell with the preset threshold, acquires a frequency band in which an RSRP is less than the preset threshold, and uses the frequency band as a candidate frequency band of an access link, so as to determine the first candidate frequency band set.
403. The relay sends the first candidate frequency band set, an adjacent-frequency guard interval, and a duplex mode capability supported by the relay to the base station; and perform step 407.

The adjacent-frequency guard interval is determined according to an outband suppression capability of the relay. Generally, the adjacent-frequency guard interval is greater than or equal to 5 MHz.

This embodiment of the present invention is described by using an example in which the configuration apparatus receives the first candidate frequency band set, a second candidate frequency band set, the adjacent-frequency guard interval, and the duplex mode capability supported by the relay.

Specifically, the relay sends the first candidate frequency band set and the adjacent-frequency guard interval to the base station, and sends the duplex mode capability supported by the relay to the configuration apparatus configured on the base station.
404. The base station acquires a load status of each frequency band.
   The load status may be resource utilization, a quantity of users, or the like, which is not limited in this embodiment of the present invention.
405. The base station determines that a frequency band, in each frequency band, whose load status meets a preset condition is a candidate frequency band in a second candidate frequency band set, so as to determine the second candidate frequency band set of a backhaul link.
   It may be determined that a frequency band whose parameter of a load status, such as resource utilization or a quantity of users, is less than the preset threshold is the frequency band whose load status meets the preset condition, and it is determined that the frequency band, in each frequency band, whose load status meets the preset condition is the candidate frequency band of the backhaul link, so as to determine the second candidate frequency band set.
406. The base station sends the second candidate frequency band set to the configuration apparatus.
   In this embodiment of the present invention, the configuration apparatus is configured on the base station; therefore, this step is performed between the configuration apparatus and a second candidate frequency band set determining module of the base station.
407. The configuration apparatus acquires a frequency band interval between each frequency band in the first candidate frequency band set and each frequency band in the second candidate frequency band set, and performs step 408 or step 409.
   For example, candidate frequency bands in the first candidate frequency band set are f1 and f2, candidate frequency bands in the second candidate frequency band set are f3 and f4, and then frequency band intervals between f1 and f3, f1 and f4, f2 and f3, and f2 and f4 are separately calculated. Specifically, a frequency band interval between two frequency bands is obtained by subtracting an upper limit of a frequency band having a lower frequency from a lower limit of a frequency band having a higher frequency. If a lower limit point of f4 is 2660 MHz, and an upper limit point of f1 is 2620 MHz, a frequency band interval between f4 and f1 is 40 MHz; if upper limit points of f1 and f4 are both 2640 MHz, and lower limit points are both 2620 MHz, a frequency band interval between f1 and f4 is -20 MHz, that is, f1 and f4 are a same frequency band.
408. When an acquired maximum frequency band interval is greater than or equal to the adjacent-frequency guard interval, and determining, according to the duplex mode capability supported by the relay, that the relay supports a frequency division duplex mode, the configuration apparatus determines that a frequency band that is in the first candidate frequency band set and corresponding to the maximum frequency band interval is a first determined frequency band, determines that a frequency band that is in the second candidate frequency band set and corresponding to the maximum frequency band interval is a second determined frequency band, determines that a duplex mode is the frequency division duplex mode, and performs step 414.

The configuration apparatus may acquire multiple frequency band intervals by calculating the frequency band interval between each frequency band in the first candidate frequency band set and each frequency band in the second candidate frequency band set. The configuration apparatus compares the multiple frequency band intervals, and uses a frequency band interval having a maximum frequency band as the maximum frequency band interval. When the acquired maximum frequency band interval is greater than or equal to the adjacent-frequency guard interval, the configuration apparatus determines that the frequency band that is in the first candidate frequency band set and corresponding to the maximum frequency band interval is the first determined frequency band, and determines that the frequency band that is in the second candidate frequency band set and corresponding to the maximum frequency band interval is the second determined frequency band. When determining, according to the duplex mode capability supported by the relay, that the relay supports the frequency division duplex mode, the configuration apparatus determines that the duplex mode is the frequency division duplex mode.

For example, when a frequency band interval between f2 and f4 is a maximum frequency band interval max, the maximum frequency band interval max is greater than or equal to the adjacent-frequency guard interval, and it is determined, according to the duplex mode capability supported by the relay, that the relay supports the frequency division duplex mode, it is determined that f2 is the first determined frequency band, it is determined that f4 is the second determined frequency band, and it is determined that the duplex mode is the frequency division duplex mode.
409. When an acquired maximum frequency band interval is less than the adjacent-frequency guard interval, the configuration apparatus selects a frequency band interval, and determines that frequency bands that are in the first candidate frequency band set and the second candidate frequency band set and corresponding to the selected frequency band interval are respectively a first determined frequency band and a second determined frequency band; and perform step 410.
   For example, when a frequency band interval between f2 and f4 is a maximum frequency band interval max, and the maximum frequency band interval max is less than the adjacent-frequency guard interval, a frequency band interval may be randomly selected from the multiple frequency band intervals, it is determined that a frequency band that is in the first candidate frequency band set and corresponding to the selected frequency band interval is the first determined frequency band, and it is determined that a frequency band that is in the second candidate frequency band set and corresponding to the selected frequency band interval is the second determined frequency band; for example, it is determined that f1 is the first determined frequency band, and it is determined that f4 is the second determined frequency band.
410. When it is determined, according to the duplex mode capability supported by the relay, that the relay supports a full-duplex mode, determine that the duplex mode is the full-duplex mode, and perform step 414; otherwise, perform step 411.
   This embodiment of the present invention is described by using an example in which the relay supports the full-duplex mode, and it is determined that the duplex mode is the full-duplex mode, which is not limited in this embodiment of the present invention.
411. When the first determined frequency band is equal to the second determined frequency band, and determining, according to the duplex mode capability supported by the relay, that the relay supports a time division duplex mode, the configuration apparatus determines that the duplex mode is the time division duplex mode, and performs step 414; otherwise, performs step 412.
   For example, in this step, it is determined that f1 is the first determined frequency band, it is determined that f4 is the second determined frequency band; when a frequency band interval between f1 and f4 is equal to a preset interval -20 MHz, it indicates that f1 is equal to f4, and in this case, it is determined that the duplex mode is the time division duplex mode, which avoids signal interference in a same frequency band.
412. When the first determined frequency band and the second determined frequency band are adjacent frequency bands, a ratio of the adjacent-frequency guard interval to a total bandwidth of the first determined frequency band and the second determined frequency band falls within a preset ratio range, and determining, according to the duplex mode capability supported by the relay, that the relay supports a frequency division duplex mode with a reserved guard band, the configuration apparatus determines that the duplex mode is the frequency division duplex mode with the reserved guard band, and performs step 414; otherwise, performs step 413.

When a frequency band interval between f1 and f4 is equal to 0 MHz, it indicates that f1 and f4 are adjacent frequency bands, and when the ratio of the adjacent-frequency guard interval to the total bandwidth of the first determined frequency band and the second determined frequency band falls within the preset ratio range, the base station determines that the duplex mode is the frequency division duplex mode with the reserved guard band, which avoids adjacent-frequency interference.

Preferably, the preset ratio range is approximately 10%, which may not only avoid adjacent-frequency interference but also avoid waste of spectrum resources.
413. When the first determined frequency band and the second determined frequency band are adjacent frequency bands, a ratio of the adjacent-frequency guard interval to a total bandwidth of the first determined frequency band and the second determined frequency band falls outside a preset ratio range, and determining, according to the duplex mode capability supported by the relay, that the relay supports a time division duplex mode, the configuration apparatus determines that the duplex mode is the time division duplex mode, and performs step 414.
   When the first determined frequency band and the second determined frequency band are adjacent frequency bands, and the ratio of the adjacent-frequency guard interval to the total bandwidth of the first determined frequency band and the second determined frequency band falls outside the preset ratio range, to avoid signal interference, the base station determines that the duplex mode is the time division duplex mode.
414. The configuration apparatus sends the configuration results to the relay and the base station.
   Sending the configuration results by the configuration apparatus and receiving by the base station may be performed between internal interfaces of the base station and the configuration apparatus.
415. The relay and the base station configure, according to the configuration results, frequency bands and a duplex mode for an access link and the backhaul link to work.

When the frequency bands of the access link and the backhaul link are configured to work in accordance with the first determined frequency band and the second determined frequency band, when a target duplex mode in the configuration results is the duplex mode with the reserved guard band, the base station communicates with the relay in a frequency band that is in the second determined frequency band and outside a reserved guard interval; when the target duplex mode is the frequency division duplex mode, the base station communicates with the relay in the second determined frequency band in an existing manner.

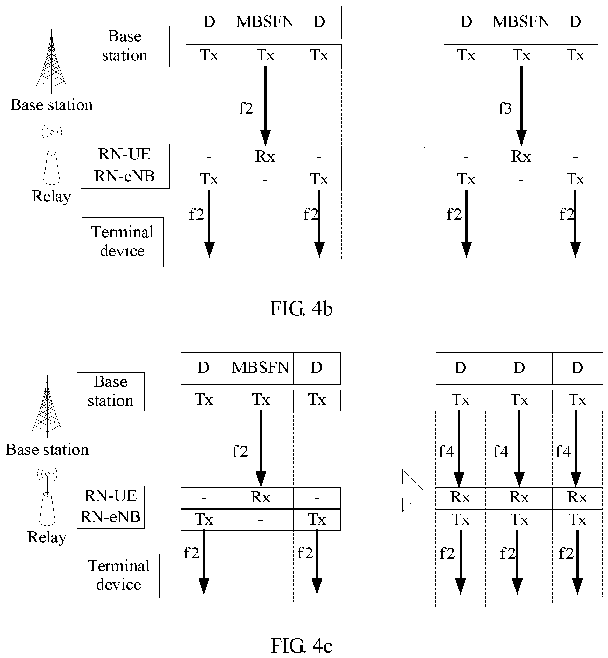

FIG. 4b is a schematic diagram of frequency band switching according to this embodiment of the present invention. As shown in FIG. 4b, the relay uses the time division duplex mode. Before frequency band switching, a frequency band of the backhaul link is f2, and a frequency band of the access link is f2; when load of f2 increases, and load of a frequency band f3 decreases, the second determined frequency band may be configured as f3; that is, the duplex mode remains unchanged, the frequency band of the backhaul link is f3, and the frequency band of the access link is f2.

When switching the duplex mode according to the configuration results, the relay and the base station need to perform configuration according to an original duplex mode and a target duplex mode in the configuration results, which may specifically include the following cases:
(1) When the original duplex mode is the time division duplex mode, and the target duplex mode is a frequency division duplex mode, a limit on a subframe occupied by the backhaul link, a limit on a start location of a PDSCH (Physical Downlink Shared Channel, physical downlink shared channel) of the backhaul link, and a PDCCH (Physical Downlink Control Channel, physical downlink control channel) of the relay are removed.
   In the time division duplex mode, the subframe occupied by the backhaul link needs to be configured, for example, a multimedia broadcast multicast service single frequency network MBSFN subframe, and the PDCCH of the relay, and the start location of the PDSCH further needs to be limited; however, in the frequency division duplex mode, a subframe for the backhaul link does not need to be configured, and the base station may use a common control channel to communicate with the relay. Therefore, when the duplex mode is switched, the limit on the subframe occupied by the backhaul link, the limit on the start location of the PDSCH of the backhaul link, and the PDCCH of the relay are removed.
   FIG. 4c is a schematic diagram of duplex mode switching according to this embodiment of the present invention. As shown in FIG. 4c, before switching is performed, the relay uses the time division duplex mode, a frequency band of the backhaul link is f2, and a frequency band of the access link is f2; when load of f2 increases, and load of a frequency band f4 decreases, the second determined frequency band may be configured as f4. Because a frequency band interval between f4 and f2 is greater than the adjacent-frequency guard interval, it may be determined that the target duplex mode is the frequency division duplex mode, that is, the relay uses the frequency division duplex mode, the frequency band of the backhaul link is f4, and the frequency band of the access link is f2. In this case, the duplex mode of the relay, the frequency band of the backhaul link, and the frequency band of the access link are all changed.
(2) When the original duplex mode is the frequency division duplex mode, and the target duplex mode is the time division duplex mode, a limit on a subframe occupied by the backhaul link, a limit on a start location of a PDSCH of the backhaul link, and a PDCCH of the relay are configured.
   In the frequency division duplex mode, a subframe for the backhaul link does not need to be configured, and the base station may use a common control channel to communicate with the relay; however, in the time division duplex mode, the subframe occupied by the backhaul link needs to be configured, for example, a multimedia broadcast multicast service single frequency network MBSFN subframe, and the PDCCH of the relay, and the start location of the PDSCH further needs to be limited. Therefore, when the duplex mode is switched, the limit on the subframe occupied by the backhaul link, the limit on the start location of the PDSCH of the backhaul link, and the PDCCH of the relay are configured.
(3) When the original duplex mode is the time division duplex mode, and the target duplex mode is the frequency division duplex mode with the reserved guard band, a limit on a subframe occupied by the backhaul link, a limit on a start location of a PDSCH of the backhaul link, and a PDCCH of the relay are removed, and a start location and an end location of a frequency domain of the backhaul link are set.
   In the time division duplex mode, the subframe occupied by the backhaul link and the PDCCH of the relay need to be configured, and the start location of the PDSCH further needs to be limited, but the start location and the end location of the frequency domain of the backhaul link do not need to be set. However, in the frequency division duplex mode with the reserved guard band, a subframe for the backhaul link does not need to be configured, and the base station may use a common control channel to communicate with the relay, but the start location and the end location of the frequency domain of the backhaul link need to be set. Therefore, when the duplex mode is switched, the limit on the subframe occupied by the backhaul link, the limit on the start location of the PDSCH of the backhaul link, and the PDCCH of the relay are removed, and the start location and the end location of the frequency domain of the backhaul link are set.
(4) When the original duplex mode is the frequency division duplex mode, and the target duplex mode is the frequency division duplex mode with the reserved guard band, a start location and an end location of a frequency domain of the backhaul link are set.
   The start location and the end location of the frequency domain of the backhaul link do not need to be set in the frequency division duplex mode, but need to be set in the mode with the reserved guard band. Therefore, when the duplex mode is switched, the start location and the end location of the frequency domain of the backhaul link are set.
(5) When the original duplex mode is the frequency division duplex mode with the reserved guard band, and the target duplex mode is the time division duplex mode, a start location and an end location of a frequency domain of the backhaul link are removed, and a limit on a subframe occupied by the backhaul link, a limit on a start location of a PDSCH of the backhaul link, and a PDCCH of the relay are configured.
   In the frequency division duplex mode with the reserved guard band, a subframe for the backhaul link does not need to be configured, and the base station may use a common control channel to communicate with the relay, but the start location and the end location of the frequency domain of the backhaul link need to be set. However, in the time division duplex mode, the subframe occupied by the backhaul link and the PDCCH of the relay need to be configured, and the start location of the PDSCH further needs to be limited, but the start location and the end location of the frequency domain of the backhaul link do not need to be set. Therefore, when the duplex mode is switched, the start location and the end location of the frequency domain of the backhaul link are removed, and the limit on the subframe occupied by the backhaul link, the limit on the start location of the PDSCH of the backhaul link, and the PDCCH of the relay are configured.
(6) When the original duplex mode is the frequency division duplex mode with the reserved guard band, and the target duplex mode is the frequency division duplex mode, a start location and an end location of a frequency domain of the backhaul link are removed.
   The start location and the end location of the frequency domain of the backhaul link need to be set in the frequency division duplex mode with the reserved guard band, but do not need to be set in the frequency division duplex mode. Therefore, when the duplex mode is switched, the start location and the end location of the frequency domain of the backhaul link are removed.
(7) When the original duplex mode is the full-duplex mode, and the target duplex mode is the time division duplex mode, a limit on a subframe occupied by the backhaul link, a limit on a start location of a PDSCH of the backhaul link, and a PDCCH of the relay are configured.
   The full-duplex mode is similar to the frequency division duplex mode, and a difference is that in the frequency division duplex mode, the access link and the backhaul link work in different frequency bands, but in the full-duplex mode, the access link and the backhaul link may work in a same frequency band, and the relay has a self-interference cancellation capability.
(8) When the original duplex mode is the time division duplex mode, and the target duplex mode is the full-duplex mode, a limit on a subframe occupied by the backhaul link, a limit on a start location of a PDSCH of the backhaul link, and a PDCCH of the relay are removed.
(9) When the original duplex mode is the full-duplex mode, and the target duplex mode is the frequency division duplex mode with the reserved guard band, a start location and an end location of a frequency domain of the backhaul link are set.
(10) When the original duplex mode is the frequency division duplex mode with the reserved guard band, and the target duplex mode is the full-duplex mode, a start location and an end location of a frequency domain of the backhaul link are removed.

Optionally, when the frequency band of the access link, the frequency band of the backhaul link, and the duplex mode are to be switched according to the configuration results, an RRC RN Reconfiguration message may be used to complete the switching, and the following fields need to be added to the message to implement switching of the duplex mode:
(1) setting/removing a limit on a subframe occupied by the backhaul link;
(2) setting/removing a limit on a start location of a PDSCH;
(3) setting/removing a PDCCH of the relay; and
(4) setting/removing a start location and an end location of a frequency domain of the backhaul link.

According to the method provided in this embodiment of the present invention, configuration results are determined according to a first candidate frequency band set, a second candidate frequency band set, and an adjacent-frequency guard interval, and frequency bands and a duplex mode are configured, according to the configuration results, for an access link and a backhaul link to work, so that a communications network can be flexibly configured according to an interference status and a load status, thereby improving spectrum resource utilization and network performance.

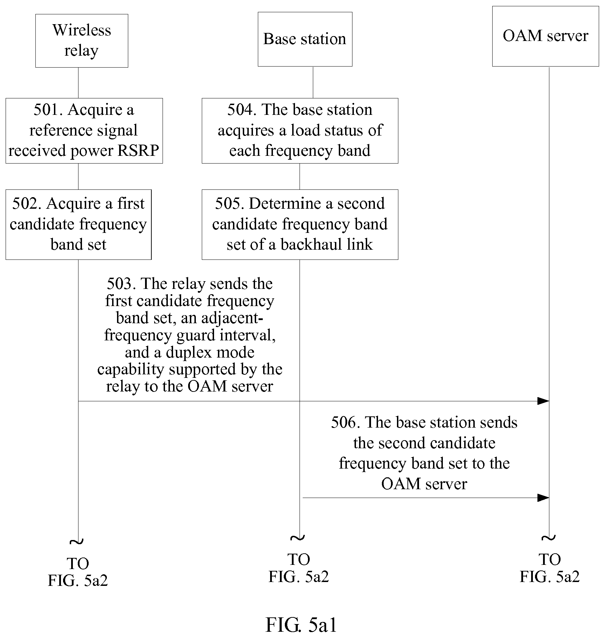

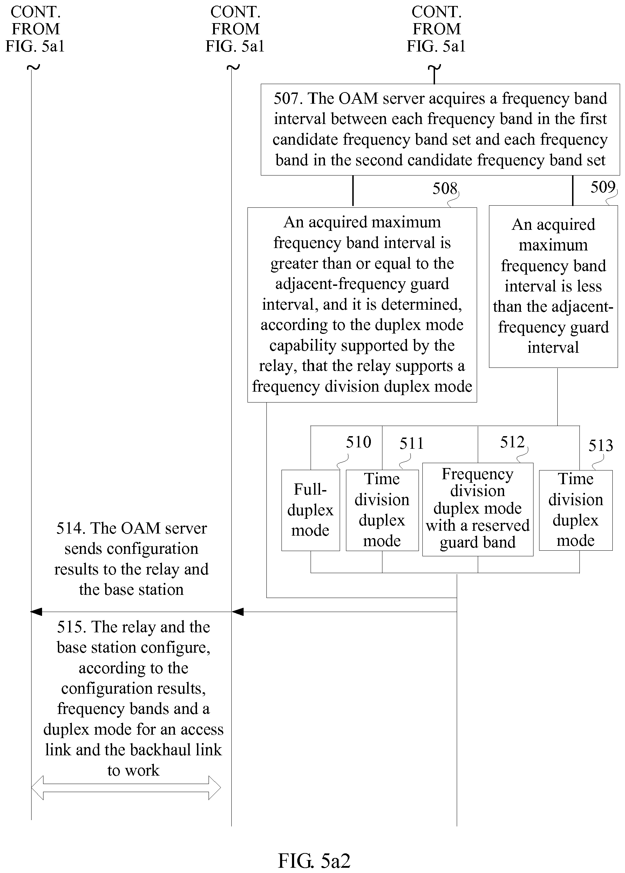

FIG. 5a1 and FIG. 5a2 are a flowchart of a relay configuration method according to an embodiment of the present invention. This embodiment of the present invention is described by using an example of interaction between a base station, a wireless relay relay, and an operation, administration and maintenance OAM server or a centralized controller. A configuration apparatus is configured on the OAM server or the centralized controller. Referring to FIG. 5a1 and FIG. 5a2, the method includes the following steps:
501. The relay acquires a reference signal received power RSRP, in each frequency band, of a neighboring cell of a coverage area of the relay.
502. When an RSRP, in any frequency band, of the neighboring cell is less than a preset threshold, the relay acquires the frequency band in which the RSRP is less than the preset threshold and uses the frequency band as a candidate frequency band in a first candidate frequency band set.
503. The relay sends the first candidate frequency band set, an adjacent-frequency guard interval, and a duplex mode capability supported by the relay to the OAM server; and perform step 507.

Optionally, when the relay works in a time division duplex mode, the base station may configure a backhaul link, and the relay measures, in a downlink subframe, signal strength of an access link, which is recorded as x, for example, strength of a downlink pilot signal of the base station. In addition, the base station configures the access link, and the relay measures, in an uplink subframe, signal strength of the backhaul link, which is recorded as y, for example, strength of an uplink pilot signal of a UE. When both the signal strength x of the access link and the signal strength y of the backhaul link are less than a preset threshold, it may be considered that the relay may work in a full-duplex mode, that is, the duplex mode capability supported by the relay includes the full-duplex mode.

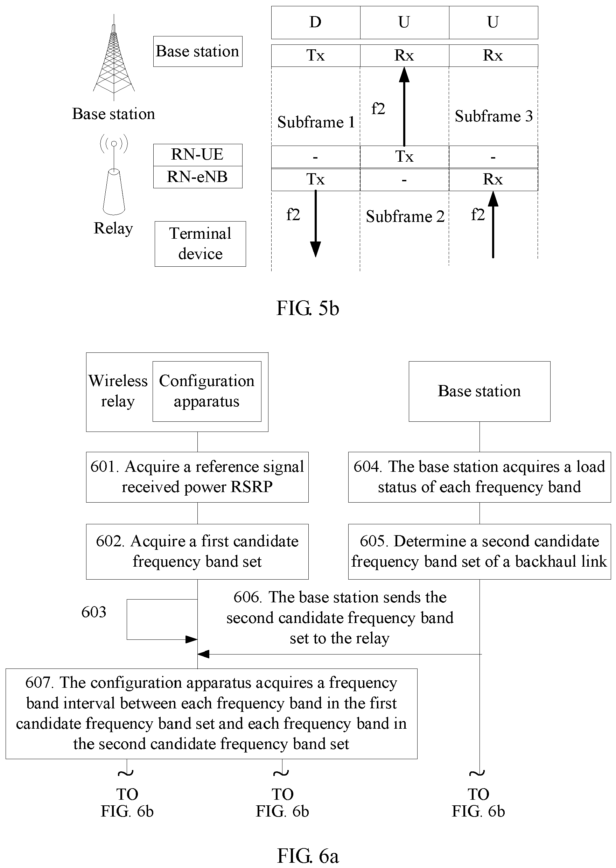

Referring to FIG. 5b, the relay works in the time division duplex mode, and frequency bands in which the access link and the backhaul link work are both f2. The base station configures the backhaul link, and the relay measures, in a subframe 1, signal strength x of the access link; the base station configures the access link, and the relay measures, in a subframe 2, signal strength y of the backhaul link. When x and y are less than the preset threshold, is the base station determines that the duplex mode capability supported by the relay includes the full-duplex mode.

This embodiment of the present invention is described by using an example in which the OAM server configures a first determined frequency band, a second determined frequency band, and a duplex mode. A process in which the centralized controller configures the first determined frequency band, the second determined frequency band, and the duplex mode is similar, and details are not described herein again.

This embodiment of the present invention is described by using an example in which the configuration apparatus receives the first candidate frequency band set, a second candidate frequency band set, the adjacent-frequency guard interval, and the duplex mode capability supported by the relay.

Specifically, the relay sends the first candidate frequency band set and the adjacent-frequency guard interval to the OAM server, and sends the duplex mode capability supported by the relay to the configuration apparatus configured on the OAM server.
504. The base station acquires a load status of each frequency band.
   The load status may be resource utilization, a quantity of users, or the like, which is not limited in this embodiment of the present invention.
505. The base station determines that a frequency band, in each frequency band, whose load status meets a preset condition is a candidate frequency band in a second candidate frequency band set, so as to determine the second candidate frequency band set of a backhaul link.
506. The base station sends the second candidate frequency band set to the OAM server.
   In this embodiment of the present invention, the configuration apparatus is configured on the OAM server; therefore, the base station sends the second candidate frequency band set to the OAM server, and the OAM server performs configuration.
   It should be noted that, in this embodiment of the present invention, the relay sends the first candidate frequency band set and the adjacent-frequency guard interval to the OAM server, and the base station sends the second candidate frequency band set to the OAM server; or it may be that the relay sends the first candidate frequency band set and the adjacent-frequency guard interval to the base station, and the base station sends the first candidate frequency band set, the adjacent-frequency guard interval, and the second candidate frequency band set to the OAM server. This embodiment of the present invention sets no limitation thereto.
507. The OAM server acquires a frequency band interval between each frequency band in the first candidate frequency band set and each frequency band in the second candidate frequency band set, and performs step 508 or step 509.
508. When an acquired maximum frequency band interval is greater than or equal to the adjacent-frequency guard interval, and determining, according to the duplex mode capability supported by the relay, that the relay supports a frequency division duplex mode, the OAM server determines that a frequency band that is in the first candidate frequency band set and corresponding to the maximum frequency band interval is a first determined frequency band, determines that a frequency band that is in the second candidate frequency band set and corresponding to the maximum frequency band interval is a second determined frequency band, determines that a duplex mode is the frequency division duplex mode, and performs step 514.
   The OAM server may acquire multiple frequency band intervals by calculating the frequency band interval between each frequency band in the first candidate frequency band set and each frequency band in the second candidate frequency band set. The OAM server compares the multiple frequency band intervals, and uses a frequency band interval having a maximum frequency band as the maximum frequency band interval. When the acquired maximum frequency band interval is greater than or equal to the adjacent-frequency guard interval, the OAM server determines that the frequency band that is in the first candidate frequency band set and corresponding to the maximum frequency band interval is the first determined frequency band, determines that the frequency band that is in the second candidate frequency band set and corresponding to the maximum frequency band interval is the second determined frequency band, and when determining, according to the duplex mode capability supported by the relay, that the relay supports the frequency division duplex mode, determines that the duplex mode is the frequency division duplex mode.
509. When an acquired maximum frequency band interval is less than the adjacent-frequency guard interval, the OAM server selects a frequency band interval, and determines that frequency bands that are in the first candidate frequency band set and the second candidate frequency band set and corresponding to the selected frequency band interval are respectively a first determined frequency band and a second determined frequency band; and performs step 510.
510. When determining, according to the duplex mode capability supported by the relay, that the relay supports a full-duplex mode, determine that the duplex mode is the full-duplex mode, and perform step 514; otherwise, perform step 511.
   This embodiment of the present invention is described by using an example in which the relay supports the full-duplex mode, and it is determined that the duplex mode is the full-duplex mode, which is not limited in this embodiment of the present invention.
511. When the first determined frequency band is equal to the second determined frequency band, and determining, according to the duplex mode capability supported by the relay, that the relay supports a time division duplex mode, the OAM server determines that the duplex mode is the time division duplex mode, and performs step 514; otherwise, performs step 512.
512. When the first determined frequency band and the second determined frequency band are adjacent frequency bands, a ratio of the adjacent-frequency guard interval to a total bandwidth of the first determined frequency band and the second determined frequency band falls within a preset ratio range, and determining, according to the duplex mode capability supported by the relay, that the relay supports a frequency division duplex mode with a reserved guard band, the OAM server determines that the duplex mode is the frequency division duplex mode with the reserved guard band, and performs step 514; otherwise, performs step 513.
   Preferably, the preset ratio range is approximately 10%, which may not only avoid adjacent-frequency interference but also avoid waste of spectrum resources.
513. When the first determined frequency band and the second determined frequency band are adjacent frequency bands, a ratio of the adjacent-frequency guard interval to a total bandwidth of the first determined frequency band and the second determined frequency band falls outside a preset ratio range, and determining, according to the duplex mode capability supported by the relay, that the relay supports a time division duplex mode, the OAM server determines that the duplex mode is the time division duplex mode, and performs step 514.
   When the first determined frequency band and the second determined frequency band are adjacent frequency bands, the ratio of the adjacent-frequency guard interval to the total bandwidth of the first determined frequency band and the second determined frequency band falls outside the preset ratio range, and determining, according to the duplex mode capability supported by the relay, that the relay supports the time division duplex mode, to avoid signal interference, the OAM server determines that the duplex mode is the time division duplex mode.
514. The OAM server sends the configuration results to the relay and the base station.
515. The relay and the base station configure, according to the configuration results, frequency bands and a duplex mode for an access link and the backhaul link to work.

According to the method provided in this embodiment of the present invention, configuration results are determined according to a first candidate frequency band set, a second candidate frequency band set, and an adjacent-frequency guard interval, and frequency bands and a duplex mode are configured, according to the configuration results, for an access link and a backhaul link to work, so that a communications network can be flexibly configured according to an interference status and a load status, thereby improving spectrum resource utilization and network performance.

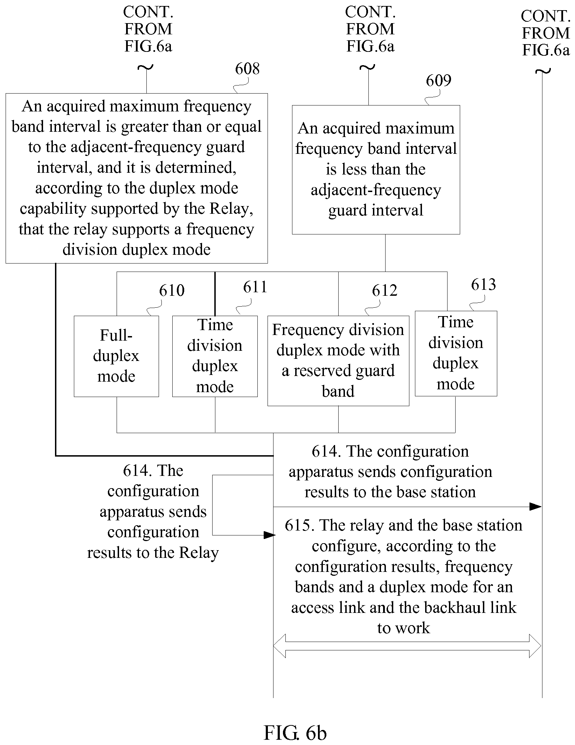

FIG. 6a and FIG. 6b are a flowchart of a relay configuration method according to an embodiment of the present invention. Two interaction parties in this embodiment of the present invention are a base station and a wireless relay relay, and a configuration apparatus is configured on the relay. Referring to FIG. 6a and FIG. 6b, the method includes the following steps:
601. The relay acquires a reference signal received power RSRP, in each frequency band, of a neighboring cell of a coverage area of the relay.
602. When an RSRP, in any frequency band, of the neighboring cell is less than a preset threshold, the relay acquires the frequency band in which the RSRP is less than the preset threshold and uses the frequency band as a candidate frequency band in a first candidate frequency band set.
603. The relay sends the first candidate frequency band set, an adjacent-frequency guard interval, and a duplex mode capability supported by the relay to the configuration apparatus; and perform step 607.
   In this embodiment of the present invention, the configuration apparatus is configured on the relay; therefore, this step is performed between different functional modules of the relay.
   This embodiment of the present invention is described by using an example in which the configuration apparatus receives the first candidate frequency band set, a second candidate frequency band set, the adjacent-frequency guard interval, and the duplex mode capability supported by the relay.
604. The base station acquires a load status of each frequency band.
605. Determine that a frequency band, in each frequency band, whose load status meets a preset condition is a candidate frequency band in a second candidate frequency band set, so as to determine the second candidate frequency band set of a backhaul link.
606. The base station sends the second candidate frequency band set to the relay.
   In this embodiment of the present invention, the configuration apparatus is configured on the relay; therefore, the base station sends the second candidate frequency band set to the relay, and the relay performs configuration.
607. The configuration apparatus acquires a frequency band interval between each frequency band in the first candidate frequency band set and each frequency band in the second candidate frequency band set, and performs step 608 or step 609.
608. When an acquired maximum frequency band interval is greater than or equal to the adjacent-frequency guard interval, and determining, according to the duplex mode capability supported by the relay, that the relay supports a frequency division duplex mode, the configuration apparatus determines that a frequency band that is in the first candidate frequency band set and corresponding to the maximum frequency band interval is a first determined frequency band, determines that a frequency band that is in the second candidate frequency band set and corresponding to the maximum frequency band interval is a second determined frequency band, determines that a duplex mode is the frequency division duplex mode, and performs step 614.
609. When an acquired maximum frequency band interval is less than the adjacent-frequency guard interval, the configuration apparatus selects a frequency band interval, and determines that frequency bands that are in the first candidate frequency band set and the second candidate frequency band set and corresponding to the selected frequency band interval are respectively a first determined frequency band and a second determined frequency band; and perform step 610.
610. When determining, according to the duplex mode capability supported by the relay, that the relay supports a full-duplex mode, determine that the duplex mode is the full-duplex mode, and perform step 614; otherwise, perform step 611.
611. When the first determined frequency band is equal to the second determined frequency band, and determining, according to the duplex mode capability supported by the relay, that the relay supports a time division duplex mode, the configuration apparatus determines that the duplex mode is the time division duplex mode, and performs step 614; otherwise, performs step 612.
612. When the first determined frequency band and the second determined frequency band are adjacent frequency bands, a ratio of the adjacent-frequency guard interval to a total bandwidth of the first determined frequency band and the second determined frequency band falls within a preset ratio range, and determining, according to the duplex mode capability supported by the relay, that the relay supports a frequency division duplex mode with a reserved guard band, the configuration apparatus determines that the duplex mode is the frequency division duplex mode with the reserved guard band, and performs step 614; otherwise, performs step 613.
   Preferably, the preset ratio range is approximately 10%, which may not only avoid adjacent-frequency interference but also avoid waste of spectrum resources.
613. When the first determined frequency band and the second determined frequency band are adjacent frequency bands, a ratio of the adjacent-frequency guard interval to a total bandwidth of the first determined frequency band and the second determined frequency band falls outside a preset ratio range, and determining, according to the duplex mode capability supported by the relay, that the relay supports a time division duplex mode, the configuration apparatus determines that the duplex mode is the time division duplex mode, and performs step 614.
614. The configuration apparatus sends the configuration results to the relay and the base station.
615. The relay and the base station configure, according to the configuration results, frequency bands and a duplex mode for an access link and the backhaul link to work.

According to the method provided in this embodiment of the present invention, configuration results are determined according to a first candidate frequency band set, a second candidate frequency band set, and an adjacent-frequency guard interval, and frequency bands and a duplex mode are configured, according to the configuration results, for an access link and a backhaul link to work, so that a communications network can be flexibly configured according to an interference status and a load status, thereby improving spectrum resource utilization and network performance.

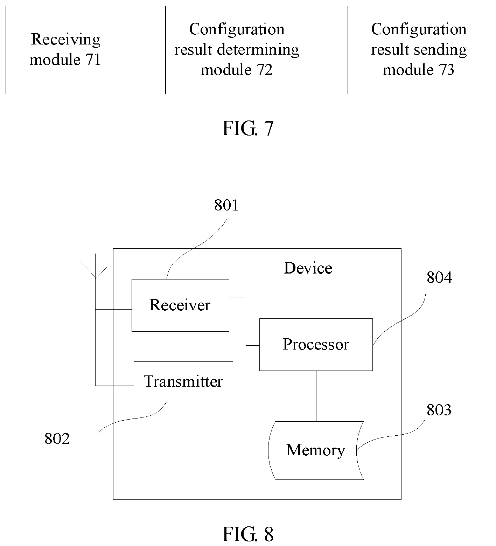

FIG. 7 is a schematic structural diagram of a configuration apparatus according to an embodiment of the present invention. Referring to FIG. 7, the apparatus includes: a receiving module 71, a configuration result determining module 72, a configuration result sending module 73.

The receiving module 71 is configured to receive a first candidate frequency band set, a second candidate frequency band set, and an adjacent-frequency guard interval, and/or receive a duplex mode capability supported by a relay, where the adjacent-frequency guard interval is determined according to an outband suppression capability of the relay, the first candidate frequency band set includes a candidate frequency band of an access link, and the second candidate frequency band set includes a candidate frequency band of a backhaul link. The configuration result determining module 72 is connected to the receiving module 71; the configuration result determining module 72 is configured to determine configuration results of the access link and the backhaul link according to the first candidate frequency band set, the second candidate frequency band set, and the adjacent-frequency guard interval, and/or the duplex mode capability supported by the relay, where the configuration results include a first determined frequency band and a second determined frequency band, and/or the configuration results include a duplex mode. The configuration result sending module 73 is connected to the configuration result determining module 72; the configuration result sending module 73 is configured to send the configuration results to the relay and a base station separately, so that the relay and the base station configure, according to the configuration results, frequency bands and/or a duplex mode for the access link and the backhaul link to work.

Optionally, the configuration result determining module 72 includes:
a first determining unit, configured to acquire the first determined frequency band and the second determined frequency band according to the first candidate frequency band set, the second candidate frequency band set, and the adjacent-frequency guard interval; or
a second determining unit, configured to determine the duplex mode according to the duplex mode capability supported by the relay; or
a third determining unit, configured to acquire the first determined frequency band and the second determined frequency band according to the first candidate frequency band set, the second candidate frequency band set, and the adjacent-frequency guard interval, and determine the duplex mode according to the first determined frequency band, the second determined frequency band, and the duplex mode capability supported by the relay.

Optionally, the first determining unit includes:
a frequency band interval acquiring subunit, configured to acquire a frequency band interval between each frequency band in the first candidate frequency band set and each frequency band in the second candidate frequency band set; and
a frequency band determining subunit, configured to acquire the first determined frequency band and the second determined frequency band according to an acquired maximum frequency band interval and the adjacent-frequency guard interval.

Optionally, the frequency band determining subunit is configured to: when the acquired maximum frequency band interval is greater than or equal to the adjacent-frequency guard interval, determine that a frequency band that is in the first candidate frequency band set and corresponding to the maximum frequency band interval is the first determined frequency band, and determine that a frequency band that is in the second candidate frequency band set and corresponding to the maximum frequency band interval is the second determined frequency band; or
the frequency band determining subunit is configured to: when the acquired maximum frequency band interval is less than the adjacent-frequency guard interval, select a frequency band interval, and determine that frequency bands that are in the first candidate frequency band set and the second candidate frequency band set and corresponding to the selected frequency band interval are respectively the first determined frequency band and the second determined frequency band.

Optionally, the third determining unit is configured to: when an acquired maximum frequency band interval is greater than or equal to the adjacent-frequency guard interval, and determining, according to the duplex mode capability supported by the relay, that the relay supports a frequency division duplex mode, determine that the duplex mode is the frequency division duplex mode.

Optionally, the third determining unit is configured to: when the first determined frequency band is equal to the second determined frequency band, and determining, according to the duplex mode capability supported by the relay, that the relay supports a time division duplex mode, determine that the duplex mode is the time division duplex mode; or
the third determining unit is configured to: when the first determined frequency band is equal to the second determined frequency band, and determining, according to the duplex mode capability supported by the relay, that the relay supports a full-duplex mode, determine that the duplex mode is the full-duplex mode; or
the third determining unit is configured to: when the first determined frequency band and the second determined frequency band are adjacent frequency bands, a ratio of the adjacent-frequency guard interval to a total bandwidth of the first determined frequency band and the second determined frequency band falls within a preset ratio range, and determining, according to the duplex mode capability supported by the relay, that the relay supports a frequency division duplex mode with a reserved guard band, determine that the duplex mode is the frequency division duplex mode with the reserved guard band; or
the third determining unit is configured to: when the first determined frequency band and the second determined frequency band are adjacent frequency bands, a ratio of the adjacent-frequency guard interval to a total bandwidth of the first determined frequency band and the second determined frequency band falls outside a preset ratio range, and determining, according to the duplex mode capability supported by the relay, that the relay supports a time division duplex mode, determine that the duplex mode is the time division duplex mode.

Optionally, the apparatus is located on the base station; or
located on an operation, administration and maintenance OAM server; or
located on the relay; or
located on a centralized controller.

The receiving module 71 may be a receiver or a transceiver, the configuration result sending module 73 may be a transmitter or a transceiver, and the receiving module 71 and the configuration result sending module 73 may be integrated to form a transceiver unit, which is a transceiver corresponding to the hardware implementation. The configuration result determining module 72 may be built in or independent of a processor of the configuration apparatus in a hardware form, or may be stored in a memory of the configuration apparatus in a software form, so that the processor invokes and performs an operation corresponding to each of the foregoing modules. The processor may be a central processing unit (CPU), a microprocessor, a single-chip microcomputer, or the like.

It should be noted that: during relay configuration by the configuration apparatus provided in the foregoing embodiment, description is given only using division of the foregoing functional modules. In practice, the functions may be allocated to different functional modules for implementation as required. To be specific, an internal structure of the device is divided into different functional modules to implement all or part of the functions described above. In addition, the configuration apparatus provided in the foregoing embodiment is based on the same inventive concept as the embodiments illustrating the relay configuration method. For a specific implementation process, refer to the method embodiments, which are not described herein any further.

FIG. 8 is a schematic structural diagram of a relay device according to an embodiment of the present invention. Referring to FIG. 8, the relay device includes: a receiver 801, a transmitter 802, a memory 803, and a processor 804, where the receiver 801, the transmitter 802, and the memory 803 are separately connected to the processor 804, the memory 803 stores program code, and the processor 804 is configured to invoke the program code to execute the following operations:
receiving, by using the receiver 801, a first candidate frequency band set, a second candidate frequency band set, and an adjacent-frequency guard interval, and/or receiving, by the configuration apparatus, a duplex mode capability supported by the relay, where the adjacent-frequency guard interval is determined according to an outband suppression capability of the relay, the first candidate frequency band set includes a candidate frequency band of the access link, and the second candidate frequency band set includes a candidate frequency band of the backhaul link;
determining configuration results of the access link and the backhaul link according to the first candidate frequency band set, the second candidate frequency band set, and the adjacent-frequency guard interval, and/or the duplex mode capability supported by the relay, where the configuration results include a first determined frequency band and a second determined frequency band, and/or the configuration results include a duplex mode; and
sending, by using the transmitter 802, the configuration results to the relay and the base station separately, so that the relay and the base station configure, according to the configuration results, frequency bands and/or a duplex mode for the access link and the backhaul link to work.

Optionally, the processor 804 is further configured to invoke the program code to execute the following operations:
acquiring the first determined frequency band and the second determined frequency band according to the first candidate frequency band set, the second candidate frequency band set, and the adjacent-frequency guard interval; or
determining the duplex mode according to the duplex mode capability supported by the relay; or
acquiring the first determined frequency band and the second determined frequency band according to the first candidate frequency band set, the second candidate frequency band set, and the adjacent-frequency guard interval, and determining the duplex mode according to the first determined frequency band, the second determined frequency band, and the duplex mode capability supported by the relay.

Optionally, the processor 804 is further configured to invoke the program code to execute the following operations:
acquiring a frequency band interval between each frequency band in the first candidate frequency band set and each frequency band in the second candidate frequency band set; and
acquiring the first determined frequency band and the second determined frequency band according to an acquired maximum frequency band interval and the adjacent-frequency guard interval.

Optionally, the processor 804 is further configured to invoke the program code to execute the following operations:
when the acquired maximum frequency band interval is greater than or equal to the adjacent-frequency guard interval, determining that a frequency band that is in the first candidate frequency band set and corresponding to the maximum frequency band interval is the first determined frequency band, and determining that a frequency band that is in the second candidate frequency band set and corresponding to the maximum frequency band interval is the second determined frequency band; or
when the acquired maximum frequency band interval is less than the adjacent-frequency guard interval, selecting a frequency band interval, and determining that frequency bands that are in the first candidate frequency band set and the second candidate frequency band set and corresponding to the selected frequency band interval are respectively the first determined frequency band and the second determined frequency band.

Optionally, the processor 804 is further configured to invoke the program code to execute the following operations:
when an acquired maximum frequency band interval is greater than or equal to the adjacent-frequency guard interval, and determining, according to the duplex mode capability supported by the relay, that the relay supports a frequency division duplex mode, determining that the duplex mode is the frequency division duplex mode.

Optionally, the processor 804 is further configured to invoke the program code to execute the following operations:
when the first determined frequency band is equal to the second determined frequency band, and determining, according to the duplex mode capability supported by the relay, that the relay supports a time division duplex mode, determining that the duplex mode is the time division duplex mode; or
when the first determined frequency band is equal to the second determined frequency band, and determining, according to the duplex mode capability supported by the relay, that the relay supports a full-duplex mode, determining that the duplex mode is the full-duplex mode; or
when the first determined frequency band and the second determined frequency band are adjacent frequency bands, a ratio of the adjacent-frequency guard interval to a total bandwidth of the first determined frequency band and the second determined frequency band falls within a preset ratio range, and determining, according to the duplex mode capability supported by the relay, that the relay supports a frequency division duplex mode with a reserved guard band, determining that the duplex mode is the frequency division duplex mode with the reserved guard band; or
when the first determined frequency band and the second determined frequency band are adjacent frequency bands, a ratio of the adjacent-frequency guard interval to a total bandwidth of the first determined frequency band and the second determined frequency band falls outside a preset ratio range, and determining, according to the duplex mode capability supported by the relay, that the relay supports a time division duplex mode, determining that the duplex mode is the time division duplex mode.

Optionally, the device is located on the base station; or
located on an operation, administration and maintenance OAM server; or
located on the relay; or
located on a centralized controller.

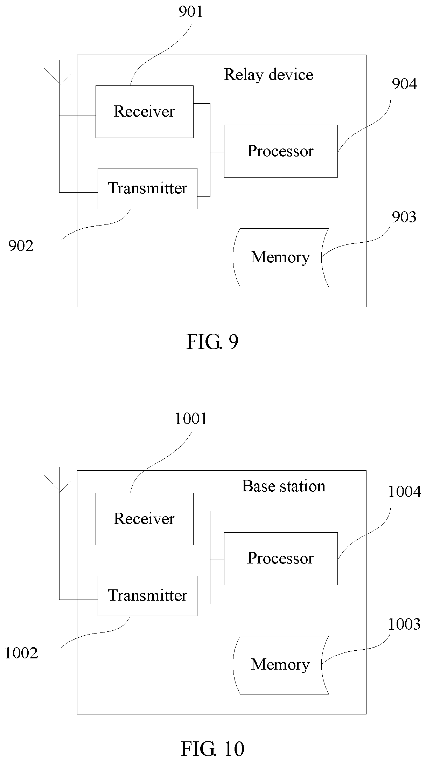

FIG. 9 is a schematic structural diagram of a relay device according to an embodiment of the present invention. Referring to FIG. 9, the relay device includes: a receiver 901, a transmitter 902, a memory 903, and a processor 904, where the receiver 901, the transmitter 902, and the memory 903 are separately connected to the processor 904, the memory 903 stores program code, and the processor 904 is configured to invoke the program code to execute the following operations:
acquiring a first candidate frequency band set of an access link according to a status of interference to a neighboring cell and a preset threshold;
sending, by using the transmitter 902, the first candidate frequency band set and an adjacent-frequency guard interval to a configuration apparatus, and/or sending, by the relay, a duplex mode capability supported by the relay to the configuration apparatus, so that the configuration apparatus determines configuration results according to the first candidate frequency band set and the adjacent-frequency guard interval that are received, and a second candidate frequency band set that is of a backhaul link and sent by a base station, and/or the received duplex mode capability supported by the relay;
receiving, by using the receiver 901, the configuration results sent by the configuration apparatus, where the configuration results include a first determined frequency band and a second determined frequency band, and/or the configuration results include a duplex mode; and
configuring, according to the configuration results, a frequency band and/or the duplex mode for the access link to work.

Optionally, the processor 904 is configured to invoke the program code to execute the following operations:
acquiring a reference signal received power, in each frequency band, of a neighboring cell of a coverage area of the relay; and
when a reference signal received power, in any frequency band, of the neighboring cell is less than the preset threshold, acquiring, by the relay, the frequency band in which the reference signal received power is less than the preset threshold and using the frequency band as a candidate frequency band in the first candidate frequency band set.

FIG. 10 is a schematic structural diagram of a base station according to an embodiment of the present invention. Referring to FIG. 10, the base station includes: a receiver 1001, a transmitter 1002, a memory 1003, and a processor 1004, where the receiver 1001, the transmitter 1002, and the memory 1003 are separately connected to the processor 1004. Certainly, the base station may further include general components, such as an antenna, a baseband processing component, an intermediate wireless frequency processing component, and an input and output apparatus, which are not limited herein in this embodiment of the present invention.

The memory 1003 stores program code, and the processor 1004 is configured to invoke the program code to execute the following operations:
determining a second candidate frequency band set of a backhaul link according to a load status of each frequency band;
sending, by using the transmitter 1002, the second candidate frequency band set to a configuration apparatus, so that the configuration apparatus determines configuration results according to a first candidate frequency band set and an adjacent-frequency guard interval that are sent by a wireless relay relay, and the second candidate frequency band set, and/or a duplex mode capability that is supported by the relay and sent by the relay;
receiving, by using the receiver 1001, the configuration results sent by the configuration apparatus; and
configuring, according to the configuration results, frequency bands and/or a duplex mode for an access link and the backhaul link to work.

Optionally, the processor 1004 is configured to invoke the program code to execute the following operations:
acquiring the load status of each frequency band; and
determining that a frequency band, in each frequency band, whose load status meets a preset condition is a candidate frequency band in the second candidate frequency band set.

It should be noted that, the base station shown in FIG. 10 may be configured to implement the any method provided in the foregoing method embodiments. Description related to the second candidate frequency band set, the load status of each frequency band, and the like is the same as that in the foregoing method embodiments, and details are not described herein again.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely exemplary embodiments of the present invention, but are not intended to limit the present invention. Any modification, equivalent replacement, and improvement made without departing from the principle of the present invention shall fall within the protection scope of the present invention.

## Claims

1. A relay configuration method, comprising:
receiving (101), by a configuration apparatus, a first candidate frequency band set, a second candidate frequency band set, and an adjacent-frequency guard interval, wherein the adjacent-frequency guard interval is determined according to an outband suppression capability of a wireless relay, the first candidate frequency band set comprises a candidate frequency band of an access link between the relay and a terminal device, and the second candidate frequency band set comprises a candidate frequency band of a backhaul link between the relay and a base station;
acquiring (102), by the configuration apparatus, a first determined frequency band and a second determined frequency band according to the first candidate frequency band set, the second candidate frequency band set, and the adjacent-frequency guard interval; and
sending (103), by the configuration apparatus, the first determined frequency band and the second determined frequency band to the relay; and
sending (103), by the configuration apparatus, the first determined frequency band and the second determined frequency band to the base station;
wherein, the first candidate frequency band set and the adjacent-frequency guard interval are sent by the relay; and the second candidate frequency band set is sent by the base station.

2. The method according to claim 1, further comprises:
receiving (101), by the configuration apparatus, a duplex mode capability supported by the relay;
determining (102), by the configuration apparatus, a duplex mode according to the first determined frequency band, the second determined frequency band, and the duplex mode capability supported by the relay; and
sending (103), by the configuration apparatus, the duplex mode to the relay and the base station.

3. The method according to claim 1, wherein the acquiring, by the configuration apparatus, the first determined frequency band and the second determined frequency band according to the first candidate frequency band set, the second candidate frequency band set, and the adjacent-frequency guard interval comprises:
acquiring a frequency band interval between each frequency band in the first candidate frequency band set and each frequency band in the second candidate frequency band set; and
acquiring the first determined frequency band and the second determined frequency band according to an acquired maximum frequency band interval and the adjacent-frequency guard interval.

4. The method according to claim 3, wherein the acquiring the first determined frequency band and the second determined frequency band according to an acquired maximum frequency band interval and the adjacent-frequency guard interval comprises:
when the acquired maximum frequency band interval is greater than or equal to the adjacent-frequency guard interval, determining, by the configuration apparatus, that a frequency band that is in the first candidate frequency band set and corresponding to the maximum frequency band interval is the first determined frequency band, and determining that a frequency band that is in the second candidate frequency band set and corresponding to the maximum frequency band interval is the second determined frequency band; or
when the acquired maximum frequency band interval is less than the adjacent-frequency guard interval, selecting, by the configuration apparatus, a frequency band interval, and determining that frequency bands that are in the first candidate frequency band set and the second candidate frequency band set and corresponding to the selected frequency band interval are respectively the first determined frequency band and the second determined frequency band.

5. The method according to any one of claims 1 to 4, wherein:
the configuration apparatus is located on an operation, administration and maintenance, OAM, server; or
the configuration apparatus is located on a centralized controller.

6. A relay configuration method, wherein the method comprises:
acquiring (201), by a wireless relay, a candidate frequency band set of an access link according to a status of interference to a neighboring cell and a preset threshold;
sending (202), by the relay, the candidate frequency band set and an adjacent-frequency guard interval to a configuration apparatus;
receiving (203), by the relay, a configuration results sent by the configuration apparatus, wherein the configuration results comprise a first determined frequency band and a second determined frequency band; and
configuring (204), by the relay according to the configuration results, a frequency band for the access link to work.

7. The method according to claim 6, further comprises:
sending (202), by the relay, a duplex mode capability supported by the relay to the configuration apparatus;
configuring (204), by the relay according to the configuration results, a duplex mode for the access link to work, wherein the duplex mode is comprised in the configuration results.

8. The method according to claim 6 or 7, wherein the acquiring, by a wireless relay, a first candidate frequency band set of an access link according to a status of interference to a neighboring cell and a preset threshold comprises:
acquiring a reference signal received power, in each frequency band, of a neighboring cell of a coverage area of the relay; and
when a reference signal received power, in any frequency band, of the neighboring cell is less than the preset threshold, acquiring, by the relay, the frequency band in which the reference signal received power is less than the preset threshold and using the frequency band as a candidate frequency band in the first candidate frequency band set.

9. A configuration apparatus, **characterized in that** the configuration apparatus is configured to carry out the method according to any one of claims 1 to 5.

10. A relay, **characterized in that** the relay is configured to carry out the method according to any one of claims 6 to 8.

11. A computer program product, comprising computer program code, which, when executed by a computer unit, will cause the computer unit to perform the method according to any one of claims 1 to 10.

## Patentansprüche

1. Relaiskonfigurationsverfahren, umfassend:
Empfangen (101) durch eine Konfigurationsvorrichtung eines ersten Kandidatenfrequenzbandsatzes, eines zweiten Kandidatenfrequenzbandsatzes und eines Nachbarfrequenzschutzintervalls, wobei das Nachbarfrequenzschutzintervall gemäß einer Außerband-Unterdrückungsfähigkeit eines drahtlosen Relais bestimmt wird, der erste Kandidatenfrequenzbandsatz ein Kandidatenfrequenzband einer Zugangsverbindung zwischen dem Relais und einem Endgerät umfasst, und der zweite Kandidatenfrequenzbandsatz ein Kandidatenfrequenzband einer Backhaul-Verbindung zwischen dem Relais und einer Basisstation umfasst;
Erfassen (102) durch die Konfigurationsvorrichtung eines ersten bestimmten Frequenzbandes und eines zweiten bestimmten Frequenzbandes gemäß dem ersten Kandidatenfrequenzbandsatz, dem zweiten Kandidatenfrequenzbandsatz und dem Nachbarfrequenzschutzintervall; und
Senden (103) durch die Konfigurationsvorrichtung des ersten bestimmten Frequenzbandes und des zweiten bestimmten Frequenzbandes an das Relais; und
Senden (103) durch die Konfigurationsvorrichtung des ersten bestimmten Frequenzbandes und des zweiten bestimmten Frequenzbandes an die Basisstation;
wobei der erste Kandidatenfrequenzbandsatz und das Nachbarfrequenzschutzintervall durch das Relais gesendet werden, und der zweite Kandidatenfrequenzbandsatz durch die Basisstation gesendet wird.

2. Verfahren nach Anspruch 1, ferner umfassend:
Empfangen (101) durch die Konfigurationsvorrichtung einer Duplexmodusfähigkeit, die vom Relais unterstützt wird;
Bestimmen (102) durch die Konfigurationsvorrichtung eines Duplexmodus gemäß dem ersten bestimmten Frequenzband, dem zweiten bestimmten Frequenzband und der vom Relais unterstützten Duplexmodusfähigkeit; und
Senden (103) durch die Konfigurationsvorrichtung des Duplexmodus an das Relais und die Basisstation.

3. Verfahren nach Anspruch 1, wobei das Erfassen durch die Konfigurationsvorrichtung des ersten bestimmten Frequenzbandes und des zweiten bestimmten Frequenzbandes gemäß dem ersten Kandidatenfrequenzbandsatz, dem zweiten Kandidatenfrequenzbandsatz und dem Nachbarfrequenzschutzintervall Folgendes umfasst:
Erfassen eines Frequenzbandintervalls zwischen jedem Frequenzband im ersten Kandidatenfrequenzbandsatz und jedem Frequenzband im zweiten Kandidatenfrequenzbandsatz; und
Erfassen des ersten bestimmten Frequenzbandes und des zweiten bestimmten Frequenzbandes gemäß einem erfassten maximalen Frequenzbandintervall und dem Nachbarfrequenzschutzintervall.

4. Verfahren nach Anspruch 3, wobei das Erfassen des ersten bestimmten Frequenzbandes und des zweiten bestimmten Frequenzbandes gemäß einem erfassten maximalen Frequenzbandintervall und dem Nachbarfrequenzschutzintervall Folgendes umfasst:
Bestimmen durch die Konfigurationsvorrichtung, wenn das erfasste maximale Frequenzbandintervall größer als das oder gleich dem Nachbarfrequenzschutzintervall ist, dass ein Frequenzband, das im ersten Kandidatenfrequenzbandsatz ist und dem maximalen Frequenzbandintervall entspricht, das erste bestimmte Frequenzband ist, und Bestimmen, dass ein Frequenzband, das im zweiten Kandidatenfrequenzbandsatz ist und dem maximalen Frequenzbandintervall entspricht, das zweite bestimmte Frequenzband ist; oder
Auswählen durch die Konfigurationsvorrichtung, wenn das erfasste maximale Frequenzbandintervall kleiner als das Nachbarfrequenzschutzintervall ist, eines Frequenzbandintervalls und Bestimmen, dass Frequenzbänder, die im ersten Kandidatenfrequenzbandsatz und im zweiten Kandidatenfrequenzbandsatz sind und dem ausgewählten Frequenzbandintervall entsprechen, das erste bestimmte Frequenzband bzw. das zweite bestimmte Frequenzband sind.

5. Verfahren nach einem der Ansprüche 1 bis 4, wobei:
die Konfigurationsvorrichtung sich auf einem Betriebs-, Verwaltungs- und Wartungsserver, OAM-Server, befindet; oder
die Konfigurationsvorrichtung sich auf einer zentralisierten Steuerung befindet.

6. Relaiskonfigurationsverfahren, wobei das Verfahren Folgendes umfasst:
Erfassen (201) durch ein drahtloses Relais eines Kandidatenfrequenzbandsatzes einer Zugangsverbindung gemäß einem Status von Interferenz für eine Nachbarzelle und einer voreingestellten Schwelle;
Senden (202) durch das Relais des Kandidatenfrequenzbandsatzes und eines Nachbarfrequenzschutzintervalls an eine Konfigurationsvorrichtung;
Empfangen (203) durch das Relais von Konfigurationsergebnissen, die von der Konfigurationsvorrichtung gesendet werden, wobei die Konfigurationsergebnisse ein erstes bestimmtes Frequenzband und ein zweites bestimmtes Frequenzband umfassen; und
Konfigurieren (204) durch das Relais gemäß den Konfigurationsergebnissen eines Frequenzbandes, damit die Zugangsverbindung funktioniert.

7. Verfahren nach Anspruch 6, ferner umfassend:
Senden (202) durch das Relais einer Duplexmodusfähigkeit, die vom Relais unterstützt wird, an die Konfigurationsvorrichtung;
Konfigurieren (204) durch das Relais gemäß den Konfigurationsergebnissen eines Duplexmodus, damit die Zugangsverbindung funktioniert, wobei der Duplexmodus in den Konfigurationsergebnissen enthalten ist.

8. Verfahren nach Anspruch 6 oder 7, wobei das Erfassen durch ein drahtloses Relais eines ersten Kandidatenfrequenzbandsatzes einer Zugangsverbindung gemäß einem Status von Interferenz für eine Nachbarzelle und einer voreingestellten Schwelle Folgendes umfasst:
Erfassen einer Referenzsignalempfangsleistung in jedem Frequenzband einer Nachbarzelle eines Versorgungsgebiets des Relais; und
Erfassen durch das Relais, wenn eine Referenzsignalempfangsleistung in einem beliebigen Frequenzband der Nachbarzelle niedriger als die voreingestellte Schwelle ist, des Frequenzbandes, in welchem die Referenzsignalempfangsleistung niedriger als die voreingestellte Schwelle ist, und Verwenden des Frequenzbandes als ein Kandidatenfrequenzband im ersten Kandidatenfrequenzbandsatz.

9. Konfigurationsvorrichtung, **dadurch gekennzeichnet, dass** die Konfigurationsvorrichtung so konfiguriert ist, dass sie das Verfahren nach einem der Ansprüche 1 bis 5 ausführt.

10. Relais, **dadurch gekennzeichnet, dass** das Relais so konfiguriert ist, dass es das Verfahren nach einem der Ansprüche 6 bis 8 ausführt.

11. Computerprogrammprodukt, umfassend Computerprogrammcode, der bei Ausführung durch eine Computereinheit die Computereinheit veranlasst, das Verfahren nach einem der Ansprüche 1 bis 10 durchzuführen.

## Revendications

1. Procédé de configuration de relais, comprenant :
la réception (101), par un appareil de configuration, d'un premier ensemble de bandes de fréquences candidates, d'un second ensemble de bandes de fréquences candidates, et d'un intervalle de garde entre fréquences adjacentes, dans lequel l'intervalle de garde entre fréquences adjacentes est déterminé conformément à une capabilité de suppression hors bande d'un relais sans fil, le premier ensemble de bandes de fréquences candidates comprend une bande de fréquences candidates d'une liaison d'accès entre le relais et un dispositif terminal, et le second ensemble de bandes de fréquences candidates comprend une bande de fréquences candidates d'une liaison terrestre entre le relais et une station de base ;
l'acquisition (102), par l'appareil de configuration, d'une première bande de fréquences déterminée et d'une seconde bande de fréquences déterminée conformément au premier ensemble de bandes de fréquences candidates, au second ensemble de bandes de fréquences candidates, et à l'intervalle de garde entre fréquences adjacentes ; et
l'envoi (103), par l'appareil de configuration, de la première bande de fréquences déterminée et de la seconde bande de fréquences déterminée au relais ; et
l'envoi (103), par l'appareil de configuration, de la première bande de fréquences déterminée et de la seconde bande de fréquences déterminée à la station de base ;
dans lequel le premier ensemble de bandes de fréquences candidates et l'intervalle de garde entre fréquences adjacentes sont envoyés par le relais ; et le second ensemble de bandes de fréquences candidates est envoyé par la station de base.

2. Procédé selon la revendication 1, comprenant en outre :
la réception (101), par l'appareil de configuration, d'une capabilité de mode duplex prise en charge par le relais ;
la détermination (102), par l'appareil de configuration, d'un mode duplex conformément à la première bande de fréquences déterminée, la seconde bande de fréquences déterminée, et la capabilité de mode duplex prise en charge par le relais ; et
l'envoi (103), par l'appareil de configuration, du mode duplex au relais et à la station de base.

3. Procédé selon la revendication 1, dans lequel l'acquisition, par l'appareil de configuration, de la première bande de fréquences déterminée et de la seconde bande de fréquences déterminée conformément au premier ensemble de bandes de fréquences candidates, au second ensemble de bandes de fréquences candidates, et à l'intervalle de garde entre fréquences adjacentes comprend :
l'acquisition d'un intervalle de bande de fréquences entre chaque bande de fréquences dans le premier ensemble de bandes de fréquences candidates et chaque bande de fréquences dans le second ensemble de bandes de fréquences candidates ; et
l'acquisition de la première bande de fréquences déterminée et de la seconde bande de fréquences déterminée conformément à un intervalle de bande de fréquences maximum acquis et à l'intervalle de garde entre fréquences adjacentes.

4. Procédé selon la revendication 3, dans lequel l'acquisition de la première bande de fréquences déterminée et de la seconde bande de fréquences déterminée conformément à un intervalle de bande de fréquences maximum et à l'intervalle de garde entre fréquences adjacentes comprend :
quand l'intervalle de bande de fréquences maximum acquis est supérieur ou égal à l'intervalle de garde entre fréquences adjacentes, la détermination, par l'appareil de configuration, qu'une bande de fréquences qui se trouve dans le premier ensemble de bandes de fréquences candidates et correspondant à l'intervalle de bande de fréquences maximum est la première bande de fréquences déterminée, et la détermination qu'une bande de fréquences qui se trouve dans le second ensemble de bandes de fréquences candidates et correspondant à l'intervalle de bande de fréquences maximum est la seconde bande de fréquences déterminée ; ou
quand l'intervalle de bande de fréquences maximum acquis est inférieur à l'intervalle de garde entre fréquences adjacentes, la sélection, par l'appareil de configuration, d'un intervalle de bande de fréquences, et la détermination que les bandes de fréquences qui se trouvent dans le premier ensemble de bandes de fréquences candidates et le second ensemble de bandes de fréquences candidates et correspondant à l'intervalle de bande de fréquences sélectionnées sont respectivement la première bande de fréquences déterminée et la seconde bande de fréquences déterminée .

5. Procédé selon l'une quelconque des revendications 1 à 4, dans lequel :
l'appareil de configuration est situé sur un serveur d'opérations, administration et maintenance, OAM ; ou
l'appareil de configuration est situé sur un contrôleur centralisé.

6. Procédé de configuration de relais, le procédé comprenant :
l'acquisition (201), par un relais sans fil, d'un ensemble de bandes de fréquences candidates d'une liaison d'accès en fonction d'un état de brouillage causé à une cellule voisine et d'un seuil prédéfini ;
l'envoi (202), par le relais, de l'ensemble de bandes de fréquences candidates et d'un intervalle de garde entre fréquences adjacentes à un appareil de configuration ;
la réception (203), par le relais, de résultats de configuration envoyés par l'appareil de configuration, dans lequel les résultats de configuration comprennent une première bande de fréquences déterminée et une seconde bande de fréquences déterminée ; et
la configuration (204), par le relais conformément aux résultats de configuration, d'une bande de fréquences sur laquelle peut fonctionner la liaison d'accès.

7. Procédé selon la revendication 6, comprenant en outre :
l'envoi, (202), par le relais à l'appareil de configuration, d'une capabilité de mode duplex prise en charge par le relais ;
la configuration (204), par le relais conformément aux résultats de configuration, d'un mode duplex sur lequel peut fonctionner la liaison d'accès, le mode duplex étant compris dans les résultats de configuration.

8. Procédé selon la revendication 6 ou 7, dans lequel l'acquisition, par un relais sans fil, d'un premier ensemble de bandes de fréquences candidates d'une liaison d'accès en fonction d'un état de brouillage causé à une cellule voisine et d'un seuil prédéfini comprend :
l'acquisition d'une puissance reçue de signal de référence, dans chaque bande de fréquences, d'une cellule voisine d'une zone de couverture du relais ; et
quand une puissance reçue de signal de référence, dans n'importe quelle bande de fréquences, de la cellule voisine est inférieure au seuil prédéfini, l'acquisition, par le relais, de la bande de fréquences dans laquelle la puissance reçue de signal de référence est inférieure au seuil prédéfini et l'utilisation de la bande de fréquences comme bande de fréquences candidates dans le premier ensemble de bandes de fréquences candidates.

9. Appareil de configuration, **caractérisé en ce que** l'appareil de configuration est configuré pour exécuter le procédé selon l'une quelconque des revendications 1 à 5.

10. Relais, **caractérisé en ce que** le relais est configuré pour exécuter le procédé selon l'une quelconque des revendications 6 à 8.

11. Produit de programme informatique, comprenant un code de programme informatique, qui, lorsqu'il est exécuté par une unité informatique, amène l'unité informatique à exécuter le procédé selon l'une quelconque des revendications 1 à 10.
